# EUROPEAN PATENT APPLICATION

(11) **EP 4 159 037 A1**
(43) Date of publication of application: **05.04.2023**
(21) Application number: 21382884.1
(22) Date of filing: 30.09.2021
(51) Int. Cl.: A01N 25/10, A01N 25/18, A01N 25/34, A01N 59/12, A01N 59/16, A01P 1/00

(54) **ANTIMICROBIAL COMPOSITE MATERIAL**

(71) Applicant: Fundació Institut Català de Nanociència i Nanotecnologia (ICN2), 08193 Bellaterra (ES); Institució Catalana de Recerca i Estudis Avançats (ICREA), 08010 Barcelona (ES); Universitat Autònoma de Barcelona, 08193 Bellaterra (Cerdanyola del Valles) (ES); Fundació Hospital Universitari Vall d'Hebron - Institut de Recerca, 08035 Barcelona (ES)
(72) Inventor: MASPOCH COMAMALA, Daniel, 08197 SANT CUGAT DEL VALLÈS (ES); FRANCO PUNTES, Víctor, 08028 BARCELONA (ES); IMAZ GABILONDO, Inhar, 08240 MANRESA (ES); GÓMEZ BASTÚS, Neus, 08172 SANT CUGAT DEL VALLÈS (ES); BOIX I SOLER, Gerard, 08195 SANT CUGAT DEL VALLÈS (ES); HAN, Xu, 08290 CERDANYOLA DEL VALLÈS (ES); MORIONES BOTERO, Oscar Hernando, 08290 CERDANYOLA DEL VALLÈS (ES); LLAGOSTERA CASAS, Montserrat, 08290 CERDANYOLA DEL VALLÈS (ES); CORTÉS GARMENDIA, María Pilar, 08017 BARCELONA (ES)
(74) Representative: ZBM Patents - Zea, Barlocci & Markvardsen

(57) **Abstract**

The invention provides a composite with antimicrobial activity comprising photothermal nanoparticles entrapped in a metal-organic framework and iodine. A method to prepare the iodine-based antimicrobial composite is also provided, along with polymer blends, coatings and medical devices containing the same.

## Description

### Technical Field

The present invention is related to the field of antimicrobial materials. The invention provides an antimicrobial composite material that may be incorporated to polymeric coatings.

### Background Art

Infectious diseases are a rapidly growing threat to humanity. A widespread and particularly menacing group of such diseases is the nosocomial infections (also called hospital-acquired infections), which are caused by bacteria, viruses, fungi, yeast or parasites acquired in hospital by a patient who was admitted for a reason other than that infection. Nosocomial infections, which are facilitated primarily via urinary catheters, are a major cause of death and increased morbidity among patients, causing 110,000 deaths every year in Europe.

Although infections can be treated with antibiotics, vaccines and other therapeutic modalities, the use of antimicrobial coatings is garnering increasing interest as a simple prophylactic strategy. These coatings impede the arrival and growth of microorganisms on surfaces, and maintain their activity (inhibition or destruction) against transitory microbiota after each use, thereby lowering the probability of infections by surface-contact with humans. Typically, they are fabricated by incorporating biocides into polymers or hydrogels, which are subsequently released in a controlled fashion. In many of the antimicrobial coatings used today, the biocide is silver nanoparticles (NPs), silver salts, metal-oxide NPs, antibiotics or quaternary ammonium compounds. However, each of these current technologies suffers from certain limitations. For instance, silver-based coatings, which are popular because they have been widely characterized and demonstrate impressive in vitro performance, actually exhibit low microbial efficacy under real conditions. Increased and inappropriate use of antibiotics has led to widespread resistance. Finally, quaternary ammonium coatings have demonstrated to be efficient, acting by disrupting the cytoplasmic and outer membrane lipid bilayers of bacteria; however, its performance can be reduced depending on the surface conditions (e.g. pH, presence of organic soil, hardness of water, and presence of blood).

Among the most efficient topical biocides is iodine, which is widely available, inexpensive and has broad-spectrum antimicrobial activity. Furthermore, it works by causing irreversible damage to the microorganism cells in a non-specific mode, meaning that, unlike antibiotics, there is no tendency to form resistances. But Iodine has a major drawback that conditions it not being suitable for many antimicrobial applications: it has an inherent low solubility in water. Alcoholic solutions of iodine solve the issue of solubility, but they permeate tissues too fast and end up over-administrating the iodine wastefully causing irritation and other undesirable side effect. Since 1955, a water-based complex of polyvinylpirrolidone (PVP) and iodine (also known as povidone-iodine; sold as Betadine^{®}, Inadine^{®} and Braunol^{®}) became the dominant way of administrating the drug.

A more recent attempt to overcome the above issues consisted on loading iodine into super-porous metal organic framework ZIF-8 (Au-Dong et al). The ZIF-8(I) material showed pH-sensitive bactericidal activity, the bacteria killing effect resulting from iodine being released from ZIF-8(I) when the MOF disintegrated at acidic pH. This approach, however, requires contact of the loaded metal organic framework with an acidic solution, which may be inconvenient for some applications, in particular for dry applications. For example, this bactericidal material has not been incorporated to polymeric coatings. Besides, release of iodine from the ZIF-8(I) material cannot be controlled.

Altogether, despite its many advantages, iodine has not been incorporated into antimicrobial films or coatings, mainly due to the difficulty of working with elemental iodine and controlling its release.

There is therefore a need to provide effective iodine-based antimicrobial materials that can be used in dry applications, for example, in antimicrobial coatings or films.

### Summary of Invention

The inventors have found that a iodine-based antimicrobial agent can be prepared by adsorbing iodine into a composite that comprises photothermal nanoparticles (PT-NPs) and a metal organic framework (MOF). The composite adsorbs and stores iodine at very high concentrations and can release it in solid state in two ways: slowly and passively at low concentrations; or, upon triggering by light with an appropriate wavelength, rapidly and actively at high concentrations. This composite is made of agglomerated MOF crystals that entrap the PT-NP (the composite is hereafter called as PT-NP@MOF). The microporous MOF adsorbs and stores iodine at high concentrations, whereas the photoactive nanoparticle enables the active light-triggered release.

Thus, a first aspect of the invention refers to a composite comprising PT-NPs entrapped in a MOF and iodine. The iodine-loaded composite is hereafter referred to as PT-NP@MOF (I₂).

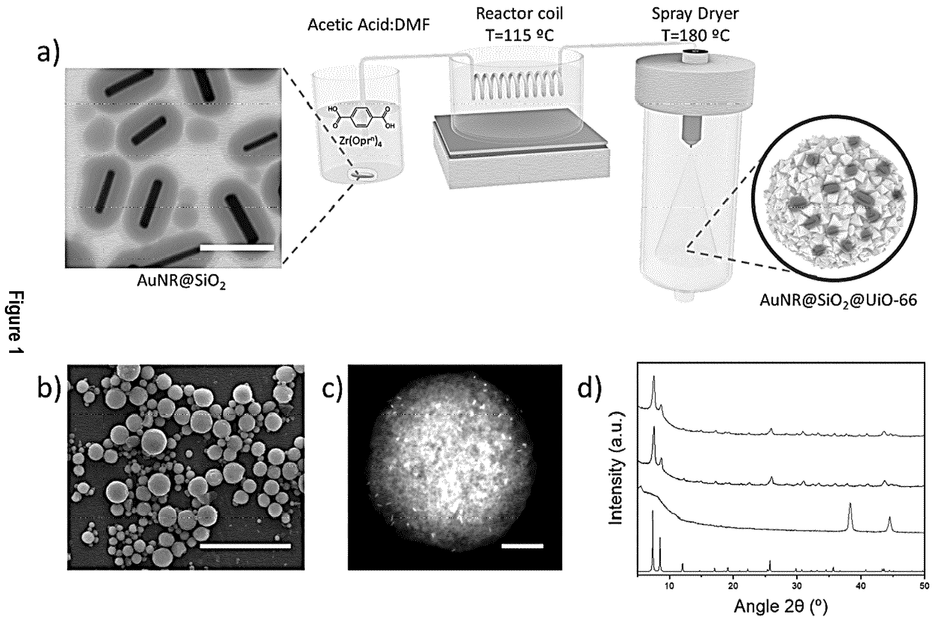

As shown in figure 1, in a typical configuration the PT-NPs (in this case, AuNRs covered by silica) are entrapped in beads of agglomerated MOF crystals (in this case the MOF is UiO-66). The composite contains macropores formed by the agglomerated MOF crystals and the PT-NPs as well as mesopores and micropores within the MOF crystalline structure. As a result, the composite has a very high adsorption capacity. In particular, the inventors have shown that iodine can be adsorbed in the pores of the composite at high amounts. The composite can be then conveniently used for preparing a iodine-based antimicrobial agent because it can store iodine at high concentrations and later release said iodine in a controlled way.

The composites of the present invention are conveniently prepared by spray-drying. First, a solution which contains the pre-formed PT-NPs and the precursors of the MOF, that is, the metal ions and organic ligands is spray-dried. When said solution is atomized in the spray-dryer at a certain temperature, MOF crystals rapidly form and agglomerate in the inside of the spray-dryer, entrapping the PT-NPs, and the obtained composite is simultaneously dried. The resulting composite is thus formed by a particulated superstructure of agglomerated MOF crystals, usually in the form of beads, wherein the PT-NPs are entrapped.

The preparation method of the composite material of the invention by continuous-flow-spray-drying is schematically shown in figure 1. The figure also shows a representation of the obtained composite material in the form of beads. Each bead is formed by MOF crystals that have agglomerated entrapping the PT-NPs. FESEM and TEM images of the beads are also shown.

A second aspect of the invention refers to a method for preparing a composite as in the first aspect of the invention which comprises:
(i) spray drying PT-NPs with metal ions and an organic ligand which is at least bidentate in the presence of a solvent;
(ii) collecting the dry composite; and
(iii) contacting the composite with iodine, in particular, gaseous diiodine.

The particular structure of the composite of the invention is derived from the specific method used for synthesizing said composite. Therefore, a third aspect of the invention moreover provides a composite obtainable by the process of the second aspect. The invention also provides a composite obtained by the process of the second aspect.

Importantly, the inventors also found that these PT-NP@MOF(I₂) composites can be incorporated into organic polymers for developing iodine-based antimicrobial polymer blends that preserve the iodine adsorption capacity and both ways of release, that is, passive or NIR-triggered release (see experimental section 2.3). The antibacterial activity of such light-responsive polymer blends was assessed against gram positive and negative bacteria (see experimental section 2.4).

A fourth aspect of the invention thus provides a polymer blend comprising a composite material as defined in the first or third aspects of the invention and a polymer.

The antimicrobial polymer blends of the fourth aspect may be advantageously used for coating all types of surfaces, such as medical devices, or hospital filters, thereby avoiding infections, in particular, nosocomial infections. Often, for coating of surfaces the polymer blend is in the form of a film. Thus, the invention also provides a polymer film comprising a polymer blend as defined in the fourth aspect of the invention.

A fifth aspect of the invention provides a coating material comprising a composite as defined in the first or third aspects, or a polymer blend as defined in the fourth aspect.

A sixth aspect of the invention refers to a medical device, medical equipment, hospital surface, or filter comprising a composite as defined in the first or third aspects, or a polymer blend as defined in the fourth aspect, or a coating material as defined in the fifth aspect.

As shown in the examples below, release of iodine from the PT-NP@MOF(I₂) composite of the invention takes place by sublimation, not requiring contact with solutions, in particular, acidic solutions. It follows that the PT-NP@MOF(I₂) composite has antimicrobial activity in dry, solid state. This means that, for example, medical devices covered by this composite, or with a coating comprising this composite, kill microorganisms that may otherwise contaminate its surface. Moreover, when irradiated with appropriate radiation, the iodine is released at high concentrations, a property that may be advantageous for many applications, for example, for surgery.

A seventh aspect of the invention refers to the use of a composite as defined in the first or third aspects as antimicrobial agent in polymer blends for the coating of surfaces. The invention also contemplates a composite as defined in the first of third aspects for use as antimicrobial agent.

An eight aspect of the invention provides a method to protect a surface against microbes which comprises applying on the surface a composite as defined in the first or third aspects or a polymer blend as defined in the fourth aspect, wherein the method comprises the release of iodine.

Finally, the invention provides a method to kill microbes which comprises irradiating with appropriate radiation a composite as defined in the first or third aspects, a polymer blend as defined in the fourth aspect, a coating material as defined in the fifth aspect, or a medical device, medical equipment, hospital surface, or filter as defined in the sixth aspect.

### Brief Description of Drawings

**Figure 1.** (a) Schematic illustration of the spray-drying synthesis of AuNR@SiO₂@UiO-66 microbeads, using AuNRs coated with a SiO₂ shell (TEM image). (b,c) Representative FE-SEM (b) and HAADF-STEM (c) of AuNR@SiO₂@UiO-66 microbeads. (d) PXRD for simulated UiO-66 (blue), AuNR@SiO₂ (green), UiO-66 microbeads (black) and AuNR@SiO₂@UiO-66 microbeads (red). Scale bars: 100 nm (a), 20 µm (b) and 1 µm (c).

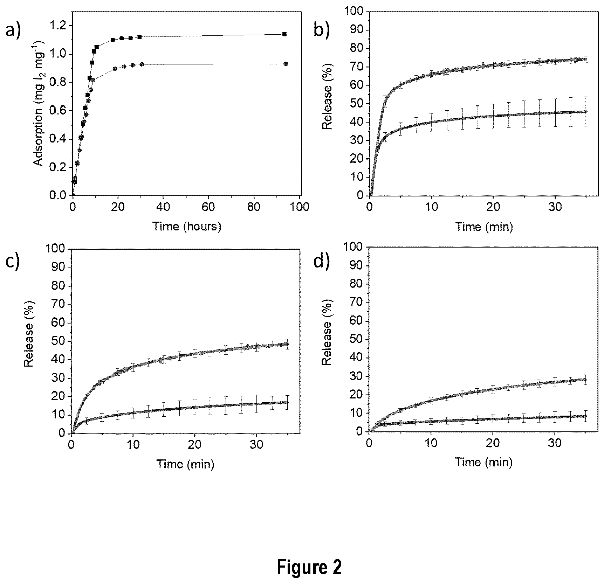

**Figure 2** (a) Iodine-adsorption isotherm at 75 °C for both UiO-66 (black) and AuNR@SiO₂@UiO-66 (red) microbeads. (b-d) Iodine-release profiles for UiO-66(I₂) (black) and AuNR@SiO₂@UiO-66(I₂) (red) microbeads as triggered by NIR light at intensities of 1000 mW cm⁻² (b), 224 mW cm⁻² (c) and 52 mW cm⁻² (d).

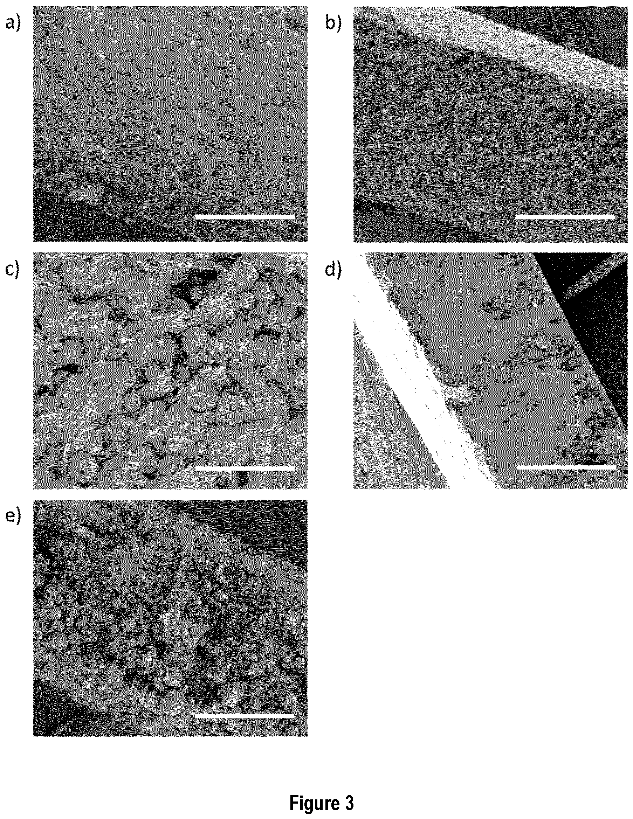

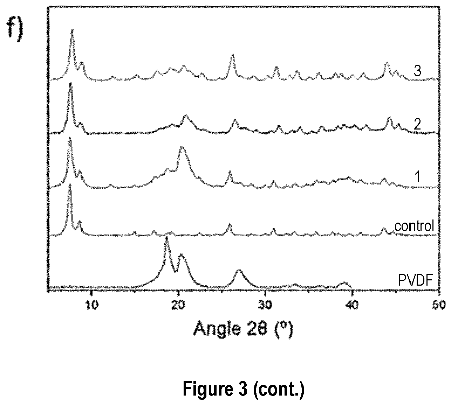

**Figure 3****.** (a-c) FE-SEM of the cross-section of the films containing AuNR@SiO₂@UiO-66 microbeads at 25% (w/w). (d,e) FE-SEM of the cross-section of the films containing AuNR@SiO₂@UiO-66 microbeads at 8% (d) or 46% (e) (w/w). (f) PXRD of a pristine PVDF film (PVDF), AuNR@SiO₂@UiO-66 microbeads (control), and films containing AuNR@SiO₂@UiO-66 microbeads at 8% (3), 25% (4) or 46% (5) (w/w). Scale bars: 200 µm (a), 50 µm (b), 5µm (c), 50 µm (d) and 50 µm (e).

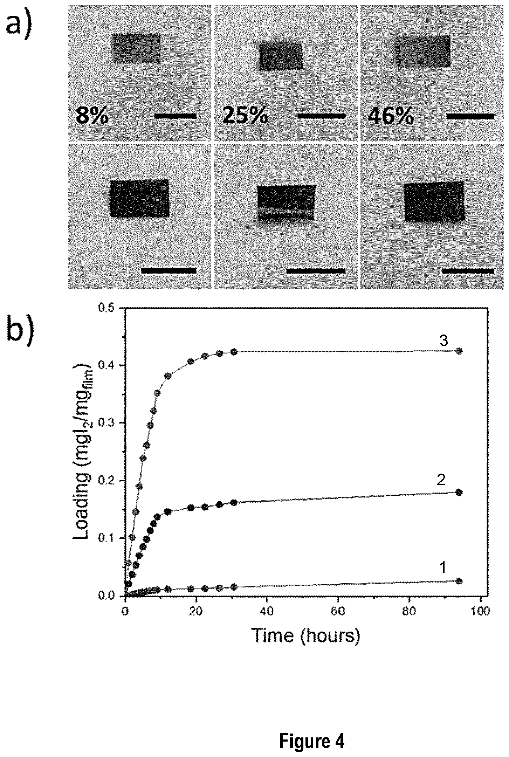

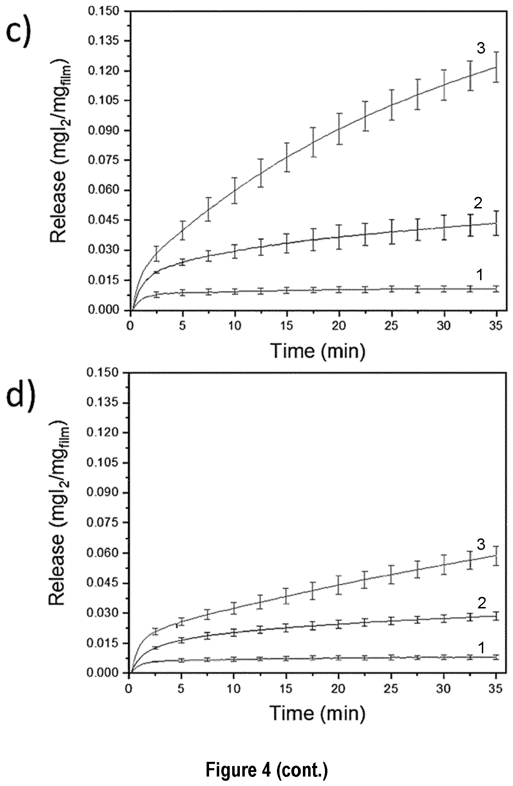

**Figure 4.** (a) Photographs of the composite films containing different concentrations of AuNR@SiO₂@UiO-66 microbeads before (top) and after (bottom) loading with iodine. (b) Adsorption isotherm of iodine at 75 °C for the films containing AuNR@SiO₂@UiO-66 microbeads at 8% (1), 25% (2) or 46% (3) (w/w). (c,d) Light-triggered iodine- release profiles for the films containing AuNR@SiO₂@UiO-66(I₂) microbeads at 8% (1), 25% (2) or 46% (3) (w/w) under irradiation intensities of 224 mW cm⁻² (c) and 52 mW cm⁻² (d).

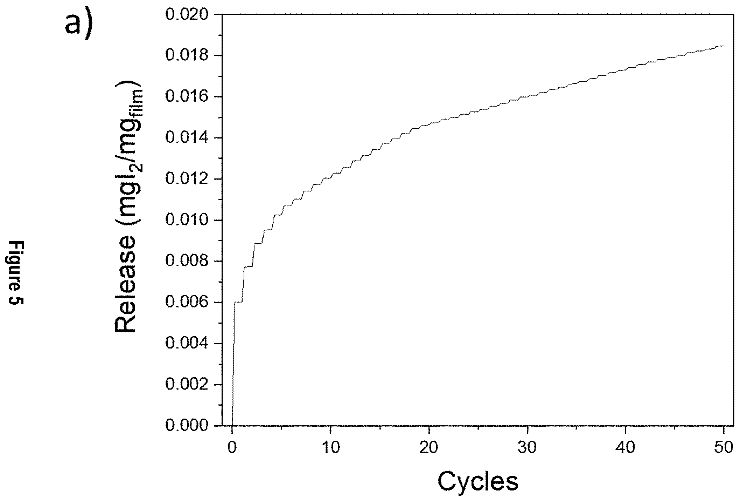

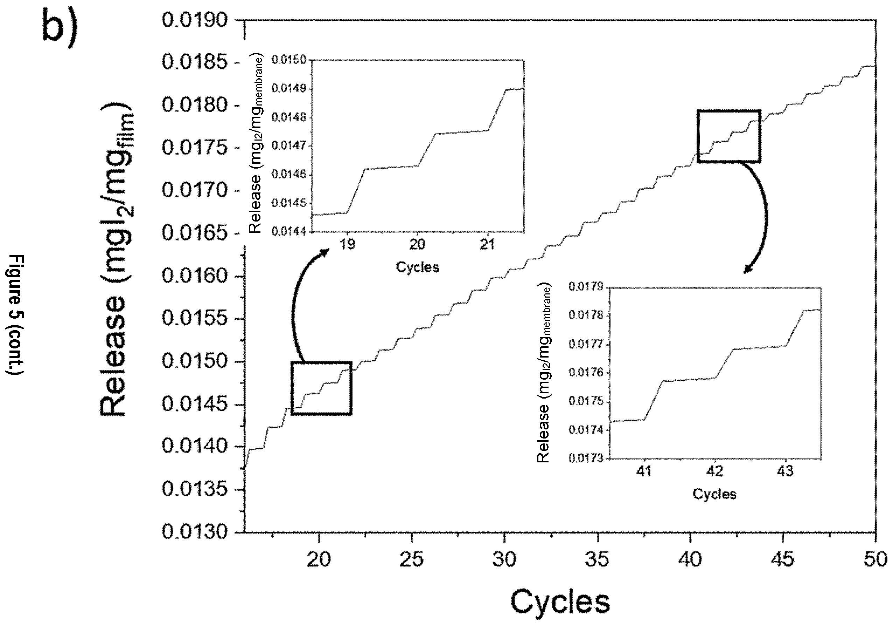

**Figure 5.** (a) Stepwise release of iodine from a composite film containing AuNR@SiO₂@UiO-66(I₂) microbeads at 25% (w/w) irradiated with NIR light at 52 mW cm⁻² and subjected to on/off switching. (b) Zoom on the stepwise release after its stabilization at the fifteenth cycle.

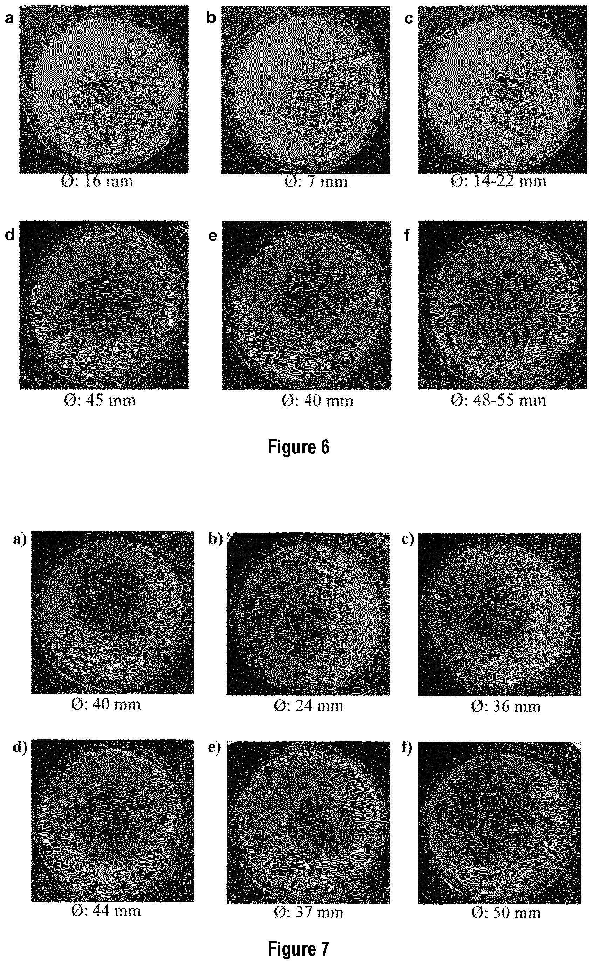

**Figure 6****.** (a-f) Corresponding inhibition growth zones of *E. coli* cultures produced in composite films containing iodine-loaded AuNR@SiO₂@UiO-66(I₂) microbeads at 8% (a-c) or 25% (d-f) (w/w). Left (a,d): photographs taken after co-incubation of both composite film and agar plate inoculated with *E. coli.* Center (b,e) and right (c, f): photographs taken after incubation of the agar plate inoculated with *E. coli* once the composite films had been removed. The composite films shown in (f,i) had been irradiated with NIR light. Ø: diameter of the growth-inhibition zone.
**Figure 7****.** Growth-inhibition zones in *S*. *aureus* cultures generated by composite films containing iodine-loaded AuNR@SiO₂@UiO-66(I₂) microbeads at 8% (a-c) or 25% (d-f) (w/w). Left (a,d) photographs taken after co-incubation of the composite film and an agar plate inoculated with *S*. *aureus.* Center (b,e) and right (c,f): photographs taken after incubation of an agar plate inoculated with *S*. *aureus,* after the composite films had been removed. The composite films shown in (c,f) had been irradiated with NIR light. Ø: diameter of the growth-inhibition zone.

### Detailed description of the invention

All terms as used in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

As mentioned above, the present invention relates to a composite comprising iodine and a composite comprising photothermal nanoparticles (PT-NPs) entrapped in a metal organic framework (MOF). In a typical configuration, the composite comprises PT-NPs entrapped in agglomerated MOF crystals (see figure 1). This composite, which is herein referred to as PT-NP@MOF, is highly porous, such that, when contacted with iodine, the composite adsorbs iodine at large concentrations and later releases said iodine. Thus, the iodine-loaded composite of the invention, herein referred to as PT-NP@MOF(I₂), has antimicrobial properties. The invention also provides a PT-NP@MOF composite, which is useful for preparing an iodine-based antimicrobial agent. Advantageously, the iodine may be released from the PT-NP@MOF(I₂) composite in a controlled manner. When the composite is irradiated with light of appropriate wavelength, the PT-NPs heat up very quickly and trigger a massive release of iodine. Alternatively, in the absence of irradiation, the iodine is released passively and slowly.

As used herein, the indefinite articles "a" and "an" are synonymous with "at least one" or "one or more." Unless indicated otherwise, definite articles used herein, such as "the" also include the plural of the noun.

The expression "% w/w" refers to percentage by weight of a compound with respect to the total weight of the composition.

An "antimicrobial" is understood, as commonly in the art, as an agent that kills microorganisms or stops their growth. Microorganisms include bacteria, viruses, protozoans, and fungi such as mold and mildew. In one embodiment of the first aspect of the invention, optionally in combination with any of the embodiments provided below, the microorganism is a pathological microorganism.

"Composite material" is understood, as commonly in the art, as a material made from two or more constituent materials with significantly different physical or chemical properties that, when combined, produce a material with characteristics different from the individual components. The individual components remain separate and distinct within the finished structure.

The term "agglomerate" generally refers to random or orderly packing of individual MOF crystals in stable units (usually in the form of beads). The particles of agglomerated crystals are not readily destroyed. For example, the agglomerates are stable in aqueous solution, even at high temperature, and are not destroyed by agitation or sonication.

By "entrapped" it is understood that the PT-NPs are physically retained by the MOF crystals within the composite.

"Nanoparticles" (herein also termed as NPs) are known as submicron scale particles of different composition, such as metal nanoparticles, organic nanoparticles, quantum dots, or carbon nanostructures. The NPs according to the present invention have at least two dimensions in the nanoscale, preferably all three dimensions in the nanoscale, and may have different shapes and sizes, for example spheres, rods, discs, tubes and hemispheres.

By photothermal nanoparticles (herein also termed "PT-NPs") it is understood nanoparticles with photothermal activity. The photothermal activity of some nanoparticles is well understood by the skilled person. Briefly, it is the ability of some nanoparticles to absorb energy and convert it into heat upon stimulating by an electromagnetic radiation such as near infrared irradiation, radiofrequency, microwaves, etc. Non-limiting PT-NPs for use in the present invention are metal nanoparticles, organic nanoparticles, quantum dots, and carbon nanostructures, all of which may be synthesized by methods well known in the art.

In one embodiment of the first aspect of the invention, optionally in combination with any of the embodiments provided above or below, the PT-NP is a metal nanoparticle. "Metal nanoparticles" (herein also termed as Me-NPs) comprising pure metals (e.g., gold, silver) or their compounds (e.g., oxides, hydroxides, sulphides, phosphates, fluorides, and chlorides). In a particular embodiment of the first aspect of the invention, optionally in combination with any of the embodiments provided above or below, the PT-NP is a gold nanoparticle (AuNP).

In a particular embodiment of the first aspect of the invention, optionally in combination with any of the embodiments provided above or below, the PT-NP is a gold nanorod. "Gold nanorods" (herein also termed as AuNRs) are known as submicron scale elongated particles comprising Au. AuNRs have outstanding photothermal activity. In a particular embodiment of the first aspect of the invention, optionally in combination with any of the embodiments provided above or below, the AuNRs are cylindrical nanoparticles that have uniform diameters ranging from a few nanometers to hundreds nanometers, with aspect ratios (length/diameter) larger than 1 but typically smaller than 10. In particular embodiments, the AuNRs have a length from 10 to 300 nm and a width from 1 to 50 nm, for example, 80 nm in length and 15 nm in width. The state of the art provides appropriate techniques and equipment to calculate the size of nanorods. For example, size of nanorods can be measured using laser diffraction analysis. Also, the size (diameter) may be calculated from their images, for example from Scanning or Transmission Electron Microscopy (SEM/TEM) images, by hand or applying an appropriate imaging software such as Gatan microscopy suite software. When referring to a set of particles as being of a particular size, it is contemplated that said particles can have a distribution of sizes around the specified size. Thus, for example, as used herein, a size of a set of AuNRs can refer to a mode of a distribution of sizes, such as a peak size of the distribution of sizes. AuNRs may be synthesized by methods well known in the art. For example, AuNRs may be prepared following the method provided by T. K. Sau, C. J. Murphy, 2004.

The inventors unexpectedly found that naked AuNRs entrapped in MOF crystals were not stable to iodine, and that they were etched even under short exposures to the halogen. This problem was solved by the inventors by covering the AuNRs with a silica shell. Thus, in a particular embodiment of the first aspect of the invention, optionally in combination with any of the embodiments provided above or below, the PT-NP is a gold nanorod coated with a shell comprising silica (AuNR@SiO₂@MOF(I₂)). The inventors surprisingly found that the silica shell was necessary to avoid the degradation of AuNRs upon exposure to iodine. The invention also provides a composite comprising AuNRs coated by a shell comprising silica and a MOF. The typical configuration for this composite would also be of AuNRs coated by a shell comprising silica entrapped in agglomerated MOF crystals (as shown in figure 1). This particular composite is hereafter referred to as AuNR@SiO₂@MOF. This composite may adsorb iodine in high concentrations and is particularly useful for preparing an iodine-based antimicrobial agent, which is achieved by contacting the AuNR@SiO₂@MOF with iodine, particularly, with gaseous diiodine.

It was found that a shell of around 30 nm of SiO₂ was appropriate to protect the AuNRs when exposed to iodine. Thus, in another particular embodiment of the first aspect of the invention, optionally in combination with any of the embodiments provided above or below, the PT-NPs in the composite are AuNR coated by a shell comprising silica, wherein the shell comprising silica has a thickness from 10 to 100 nm, in particular, a thickness from 25 to 60 nm, more particularly, a thickness from 25 to 50, for example a thickness of 30 nm. In a particular embodiment of the first aspect of the invention, optionally in combination with any of the embodiments provided above or below, the shell consists of silica.

In another embodiment of the first aspect of the invention, optionally in combination with any of the embodiments provided above or below, the PT-NPs are silica covered AuNRs having an Au content ranging from 1 to 50% (w/w), i.e. 1 to 50% weight Au with respect to the total weight of SiO₂@AuNRs. In a particular embodiment, the Au content in SiO₂@AuNRs is from 5 to 30% (w/w), more particularly, from 10 to 30 (w/w), for example, 23 %.

In another embodiment of the first aspect of the invention, optionally in combination with any of the embodiments provided above or below, the PT-NPs are silica covered AuNRs having a maximum localized surface plasmon resonance (LSRP) peak ranging from 700 to 1000 nm, for example, at 810 nm.

"Metal Organic Frameworks", also termed MOFs, are crystalline compounds consisting of metal ions (clusters) coordinated to often rigid organic molecules (organic ligands) to form one-, two-, or three-dimensional structures that are highly porous. The MOFs suitable for the present invention are also highly porous MOFs, exhibiting very high specific surface area. The specific surface area of a MOF may be measured by the Brunauer-Emmett-Teller (also known as BET), which is well known to the skilled person. Any MOF may be used in the present invention so far as it may adsorb iodine. The inventors have found that well suited MOFs for the composite of the invention are Zr-based MOFs from the UiO series, such as UiO-66 (Zr-benzene-1,4-dicarboxylic acid; CAS reference no. 1072413-80-9). The UiO series comprises MOFs which are constructed from Zr4+ and carboxylic acids, featuring, for example, UiO-66, UiO-67, UiO-68, and UiO-69. Thus, in one embodiment of the first aspect of the invention, optionally in combination with any of the embodiments provided above or below, the MOF in the composite belongs to the UiO series, i.e. is a UiO-MOF, i.e. is a MOF prepared from Zr4+ and carboxylic acids. In a particular embodiment, the MOF is selected from the group consisting of UiO-66, UiO-67, UiO-68, and UiO-69. In a more particular embodiment, the MOF is UiO-66.

In some embodiments, the MOF in the composite of the invention is functionalized to incorporate additional chemical functional groups. "Functional group" is generally a specific group (moiety) of atoms or bonds within molecules that are responsible for the characteristic chemical reactions of those molecules. Functionalization of the MOF may be achieved by methods well known to the skilled person. Functionalization may take place before synthesis of the MOF, for example, by functionalizing the organic ligand or post-synthesis once the MOF has been formed. In one embodiment of the first aspect of the invention, optionally in combination with any of the embodiments provided above or below, the MOF in the composite is functionalized UiO-66, for example, UiO-66-NH₂.

In one embodiment of the first aspect of the invention, optionally in combination with any of the embodiments provided above or below, the content of PT-NPs in the composite ranges from 1 to 50% (w/w), in particular, from 5 to 30% (w/w). In a particular embodiment of the first aspect of the invention, optionally in combination with any of the embodiments provided above or below, the PT-NPs are AuNRs coated by a shell comprising silica, wherein the content of silica-covered AuNRs in the composite ranges from 1 to 50% (w/w), more particularly, from 5 to 30% (w/w), for example, 9 %.

The composite described above may contain iodine in high concentrations and release said iodine either slowly and passively, or rapidly when induced by an appropriate radiation, thereby killing microorganisms. The iodine is mostly entrapped in the pores of the composite. In one embodiment of the first aspect of the invention, optionally in combination with any of the embodiments provided above or below, the content of iodine in the PT-NP@MOF(I₂) composite is from 0.05 to 5 mg iodine per mg composite, in particular, from 0.2 to 1.5 mg iodine per mg composite. In a particular embodiment of the first aspect of the invention, optionally in combination with any of the embodiments provided above or below, the PT-NPs are AuNRs coated by a shell comprising silica, wherein the content of iodine in the AuNR@SiO₂@MOF(I₂) composite is from 0.05 to 5 mg iodine per mg composite, more particularly, from 0.2 to 1.5 mg iodine per mg composite, for example, 0.9 mg iodine per mg composite.

The general method to prepare the composite of the invention is defined in the second aspect of the invention. The method first comprises (i) spray drying PT-NPs with metal ions and an organic ligand which is at least bidentate in the presence of a solvent and (ii) collecting the dry composite. The reaction of the metal ions and the organic ligand which is at least bidentate to form particles comprising agglomerated MOF crystals (usually in the form of beads), entrapment of the PT-NPs by the MOF particles and drying of the resulting composite material takes place simultaneously inside the spray dryer. This yields the intermediate composite PT-NP@MOF. In a further step (iii), this intermediate composite is contacted with iodine, whereby the iodine absorbs in the pores of the composite yielding the iodine-based antimicrobial composite of the invention.

By "organic ligand which is at least bidentate" it is understood an organic compound that is able to bind at least two metal ions through coordination bonds.

The term "spraying" (also known as atomizing) refers to the process of forming a spray, which is a dynamic collection of drops dispersed in a gas.

A "spray dryer" is a device well known in the state of the art where a liquid input stream is sprayed in small droplets through a nozzle (or atomizer) into a hot gas stream.

The above synthetic method affords multiple advantages. As compared to other processes, the spray drying process greatly reduces the reaction time needed for the synthesis of the composites. The process also has the advantage that it directly produces dry composites out of the initial liquid reagents, thus avoiding a filtering step and further contributing to the efficiency of preparation. The process employs mild conditions and can be performed in regular industrial spray dryer devices. Consequently, the process may be easily scaled-up to produce large quantities of composites in a very short time. Further, the process can be applied to a continuous or semi-continuous flow production process.

The PT-NPs for use in the present method for obtaining the composite of the invention have been defined above. All embodiments referring to the PT-NPs described for the first aspect of the invention may also apply to the second aspect. In particularly highlighted embodiments of the method of the second aspect of the invention, optionally in combination with any of the embodiments provided above or below, the PT-NPs are AuNRs coated by a shell comprising silica.

The metal ions for use in the process of the invention are those usually employed for the preparation of MOFs. In some embodiments of the second aspect of the invention, optionally in combination with any of the embodiments provided above or below, the metal ions are chemical elements selected from the following groups: alkali metals (Li, Na, K, Rb, Cs, Fr), alkaline earth metals (Be, Mg, Ca, Sr, Ba, Ra), transition metals (Sc, Y, Ti, Zr, Hf, V, Nb, Ta, Cr, Mo, W, Mn, Tc, Re, Fe, Ru, Os, Co, Rh, Ir, Ni, Pd, Pt, Cu, Ag, Au, Zn, Cd, Hg) post-transition metals (Al, Ga, In, TI, Sn, Pb, Bi), metalloids (B, Si, Ge, As, Sb, Te, Po), lanthanides (La, Ce, Pr, Nd, Pm, Sm, Eu, Gd, Tb, Dy, Ho, Er, Tm, Yb, Lu) and actinides (Ac, Th, Pa, U, Np, Pu, Am, Cm, Bk, Cf, Es, Fm, Md, No, Lr). Unusual metals not mentioned above or newly discovered could be also used in the method of the invention. In one embodiment of the second aspect of the invention, optionally in combination with any of the embodiments provided above or below, the metal ion is selected from the group consisting of Zr, Zn, Cu, Ni, Co, Fe, Mn, Cr, Cd, Mg, Ca, Zr, Gd, Eu, Tb, and mixtures thereof. In a particular embodiment the metal ion is selected from the group consisting of Zr, Zn, Cu, Fe, Gd, Mg, and mixtures thereof.

Practically speaking, the metal ion is provided in the form of a salt. Non-limiting examples of metal salts for use in the invention are nitrates, chlorides, sulphates, acetates, acetylacetonates, bromides, carbonates, tartrates and perchlorates.

In certain embodiments, MOF formation can take place by reacting more than one metal ion. In one embodiment of the second aspect of the invention, optionally in combination with any of the embodiments provided above or below, the method is performed by reacting between one and six different metal ions. In another embodiment of the second aspect of the invention, optionally in combination with any of the embodiments provided above or below, the process of the invention is performed by reacting between one and three different metal ions. In another embodiment of the second aspect of the invention, optionally in combination with any of the embodiments provided above or below, the process of the invention is performed by reacting between one and two different metal ions. In another embodiment of the second aspect of the invention, optionally in combination with any of the embodiments provided above or below, the process is performed by reacting one metal ion. In a particular embodiment the metal ion is Zr, more particularly particular Zr(iv), for example provided by Zr propoxide.

The organic ligands according to the invention can be bidentate, but also tridentate, tetradentate or pluridentate in the sense that they may coordinate two, three, four or multiple metal ions through coordination bonds. In one embodiment of the second aspect of the invention, optionally in combination with any of the embodiments provided above or below, the organic ligand coordinates between 2 and 20 metal ions. In another embodiment, the organic ligand coordinates between 2 and 12 metal ions. In another embodiment, the organic ligand coordinates between 2 and 8 metal ions, in particular between 2 and 4 metal ions. The ability to coordinate metal ions is conferred by certain functional groups. Non-limiting functional groups that can be contained by the organic ligand to form a MOF are -COOH, -CSSH, -NO₂, -B(OH)₂, -SO₃H, -Ge(OH)₃, -Sn(OH)₃, -Si(SH)₄, -Ge(SH)₄, -Sn(SH)₃, -PO₃H, -AsO₃H, -AsO₄H, -P(SH)₃, As(SH)₃, C₄H₂O₄, -RSH, -RNH₂, - RNR-, -ROH, -RCN, -PO(OR)₂, -RN₃, where R is hydrogen, alkyl, alkylene, preferably C1, C2, C3, C4 or C5 alkylene, or aryl group, preferably comprising 1 or 2 aromatic nuclei.

In one embodiment of the second aspect of the invention, optionally in combination with any of the embodiments provided above or below, the at least one organic ligand which is at least bidentate contains functional groups selected from the group consisting of a carboxylate, a phosphonate, an amine, an azide, a cyanide, a squaryl, a heteroatom, and mixtures thereof. Preferred heterocycles contain O, S and/or N. Non-limiting examples of preferred heterocycles in the sense of the invention are azoles, pyridines and diazines.

The at least one organic ligand which is at least bidentate may be comprised of at least one functional group as mentioned above bound to any suitable organic compound, provided that it is ensured that the organic ligand is capable of coordinating at least two metal ions. In one embodiment of the second aspect of the invention, optionally in combination with any of the embodiments provided above or below, the at least one organic ligand which is at least bidentate is a monocarboxylic acid, a dicarboxylic acid, a tricarboxylic acid, a tetracarboxylic acid, imidazole, or mixtures thereof. In a particular embodiment of the second aspect of the invention, optionally in combination with any of the embodiments provided above or below, the at least one organic ligand which is at least bidentate is selected from the group consisting of formic acid, acetic acid, oxalic acid, propanoic acid, butanedioic acid, terephthalic acid, (*E*)-butenedioic acid, benzene-1,4-dicarboxylic acid, benzene-1,3-dicarboxylic acid, benzene-1,3,5-tricarboxylic acid, 2-amino-1,4-benzenedicarboxylic acid, 2-bromo-1,4-benzenedicarboxylic acid, biphenyl-4,4'-dicarboxylic acid, biphenyl-3,3',5,5'-tetracarboxylic acid, biphenyl-3,4',5-tricarboxylic acid, 2,5-dihydroxy-1,4-benzenedicarboxylic acid, 1,3,5-tris(4-carboxyphenyl)benzene, (2*E*,4*E*)-hexa-2,4-dienedioic acid, 1,4-naphthalenedicarboxylic acid, naphthalene-2,6-dicarboxylate, pyrene- 2,7-dicarboxylic acid, 4,5,9,10-tetrahydropyrene-2,7-dicarboxylic acid, aspartic acid, glutamic acid, adenine, 4,4'-bypiridine, pyrimidine, pyrazine, 1,4-diazabicyclo[2.2.2]octane, pyridine-4-carboxylic acid, pyridine-3-carboxylic acid, imidazole, 1*H*-benzimidazole, 2-methyl-1*H*-imidazole, and 4-methyl-5-imidazolecarboxaldehyde. In another embodiment of the second aspect of the invention, optionally in combination with any of the embodiments provided above or below, the at least organic ligand which is at least bidentate is a peptide. In particular embodiments of the second aspect of the invention, optionally in combination with any of the embodiments provided above or below, the organic ligand comprises at least two carboxylic functional groups. In a particular embodiment of the second aspect of the invention, optionally in combination with any of the embodiments provided above or below, the organic ligand is terephthalic acid.

The organic ligand to be used in the process of preparation of the composite material may be functionalized to incorporate additional chemical functional groups. In some embodiments of the second aspect of the invention, optionally in combination with any of the embodiments provided above or below, the organic ligand is functionalized to incorporate amino functional groups.

The process of the invention requires that a solvent is present for the reagents to form the composite material. The term "solvent" relates to individual solvents and also to mixtures of different solvents. The solvent can be any aqueous or non-aqueous solvent. In certain embodiments of the invention, mixtures of two or more solvents are used. In one embodiment of the sixth aspect of the invention, optionally in combination with any of the embodiments provided above or below, the solvent is selected from the group consisting of water, (C1-C6)-alcohols, (C5-C7)-alkanes, alkenes, (C3-C8)-cycloalkanes, *N,N*-dimethyl formamide (DMF), *N,N*-diethyl formamide (DMF), dimethyl sulfoxide (DMSO), dioxane, chloroform, dichloromethane, diethyl ether, acetonitrile, toluene, benzene, tetrahydrofuran (THF), chlorobenzene, ethylene glycol, and mixtures thereof. In other embodiments, the solvent is water. In a particular embodiment of the second aspect of the invention, optionally in combination with any of the embodiments provided above or below, the solvent comprises DMF. In another particular embodiment of the second aspect of the invention, optionally in combination with any of the embodiments provided above or below, the solvent is DMF. In other particular embodiments of the second aspect of the invention, optionally in combination with any of the embodiments provided above or below, the solvent is a mixture of water and DMF.

There are several ways in which the reagents can be fed to the spray dryer with no apparent change in the obtained composite material. In one embodiment, a solution comprising all the reagents is sprayed into the spray dryer apparatus. The moment this solution is sprayed into the spray dryer the reaction and the drying takes place and dry composite materials are formed.

Alternatively, different solutions each containing a reagent or mixtures of the reagents can be simultaneously fed to the spray dryer through separate entrances (different nozzles or a three-fluid nozzle). Thus, in one embodiment of the second aspect of the invention, optionally in combination with any of the embodiments provided above or below, the process of the invention comprises simultaneously spraying more than one liquid solution containing the reagents.

In particular embodiments of the second aspect of the invention, optionally in combination with any of the embodiments provided above or below, a solution containing all the reagents is pre-heated to a certain temperature. This may have the advantage of activating the reagents which form Secondary Building Units (SBU) which are more suitable starting points for synthesis of different types of MOF which are based in complex and large SBUs, such as oxoclusters in the case of UiO-66 series.

In one embodiment of the second aspect, optionally in combination with any of the embodiments provided above or below, the method to prepare the composite comprises:
a) contacting PT-NPs with a metal ion and an organic ligand which is at least bidentate in the presence of a solvent;
b) spray drying the mixture obtained in step (a) under conditions appropriate to form dry composite; and
d) collecting the dry composite

In particular embodiments of the second aspect, optionally in combination with any of the embodiments provided above or below, the mixture of step (a) is preheated at a temperature from 70 °C to 150 °C, more particularly from 80 to 140 °C, more particularly from 90 °C to 140 °C, more particularly from 95 to 120 °C, or from 105 to 125 °C, or from 110 to 120 °C, for example 111 °C, 112 °C, 113 °C, 114 °C, 115 °C, 116 °C, 117 °C, 118 °C, 119 °C. Thus, in particular embodiments the PT-NPs, metal ion and organic ligand are contacted in the presence of a solvent and subjected to a certain temperature. The contacting temperature may be as described above. The contacting time is usually from 20 to 110 s, or from 30 to 90 s, or from 40 to 80 s, or from 50 to 90 s, or from 50 to 70 s, or from 40 to 50 s, or from 50 to 60 s, or from 60 to 70 s, or from 70 to 80 s. In particular embodiments, the conditions for the activation step (pre-heating step) comprise a temperature from 100 to 130 °C and a time from 30 to 90 s. In other particular embodiments of the second aspect, optionally in combination with any of the embodiments provided above or below, the conditions for the pre-heating step comprise a temperature from 110 to 120 °C. The activation also has the advantage of improving crystallinity and specific surface area of the composite materials, which translates into higher adsorption capacity. Quite conveniently, the activation and spray-drying may be performed in continuous flow. For example, in one embodiment the reagent solution is introduced into a coil flow reactor at 100-130 °C and then directly atomized into the spray dryer.

Any regular spray dryer can be employed to produce dry composite material according to the invention. Preferably, large industrial spray dryers are used. Such industrial spray dryers can produce very large quantities of composites according to the present method in surprisingly short times. The spray dryer must have as many holes as are required for the spraying of the reactants, solvents and, optionally, the base. Usually, air is employed as the hot gas stream, however, other gases can be employed, such as nitrogen. Industrial spray dryers have large capacity drums for product collection. Preferably, the spray dryer drum is coupled to a powder-removing device. The device removes the formed composite powder at regular intervals, making place for newly synthesized composite, such that the production must not be regularly stopped to empty the drum. Thus, in a particular embodiment of the second aspect, optionally in combination with any of the embodiments provided above or below, the process for the preparation of a dry composite according to the invention is a continuous process.

In some embodiments of the second aspect, optionally in combination with any of the embodiments provided above or below, the spray-drying temperature can be from 50 to 250 °C, or from 80 to 230 °C, or from 80 to 210 °C, or from 80 to 200 °C, or from 100 to 230 °C, or from 100 to 200 °C, or from 140 to 200 C, or from 150 to 200 °C, or from 120 to190 °C, or from 150 to 190 °C, or from 170 to 190 °C, for example 180 °C.

As mentioned above, the reaction time required for the preparation of composite materials for use in the process of the invention is surprisingly short. Usually, the reaction time is below 6 hours to obtain the dry product. Often, the reaction time is between 3 minutes and 4 hours, in particular between 5 minutes and 4 hours, more particularly between 7 minutes and 3 hours, more particularly between 8 minutes and 2 hours, more particularly between 9 minutes and 1 hour, and still more particularly between 10 minutes and 30 minutes.

In some embodiments of the second aspect, optionally in combination with any of the embodiments provided above or below, the process of the invention also comprises the addition of an acid or a base as a modulator agent. The modulator can be sprayed into the spray dryer together with the reagents, or it can be simultaneously sprayed through a different nozzle. The modulator can be also mixed with the reagents and preheated before spray-drying. In principle any base or acid can be used as modulator in the method of the invention. In some embodiments the spray-drying may take place in the presence of a base. Appropriate bases may be, for example, selected from the group consisting of metal alkaline or earth alkaline hydroxides, amines, metal alkaline or earth alkaline carbonates, metal alkaline or earth alkaline acetates, pyridines, azoles, diazines, and mixtures thereof. In other embodiments, for example, when the MOF is from the UiO series, the spray-drying may take place in the presence of an acid. An example of an appropriate acid is acetic acid.

The composites obtained by the process described herein have a high purity grade. Nevertheless, the composites may be subjected to a purification step. Thus, in one embodiment of the second aspect of the invention, optionally in combination with any of the embodiments provided above or below, the process for the preparation of the composite material additionally comprises a purification step. Usually, this purification step comprises washing the composites coming out of the spray dryer with an appropriate solvent and drying. As non-limiting suitable solvents for the purification step the following can be mentioned: water, methanol, ethanol, isopropanol, heptane, hexane, pentane, cyclohexane, alkenes, DMF, DEF, DMSO, dioxane, chloroform, dichloromethane, diethyl ether, acetonitrile, toluene, benzene, THF, chlorobenzene, ethylene glycol, and mixtures thereof.

In a particular embodiment of the second aspect, optionally in combination with any of the embodiments provided above or below, the process of the invention comprises: a) contacting AuNRs coated by a shell comprising silica with Zr(iv) ions and an organic ligand which is at least bidentate in the presence of a solvent; b) pre-heating the mixture obtained from step a) to a temperature from 95 °C to 120 °C; c) spray drying the pre-heated mixture obtained from step b) at a temperature between 120 and 190 °C to yield dry composite material; d) collecting the dry composite material and e) contacting the composite material with iodine.

In another particular embodiment of the second aspect, optionally in combination with any of the embodiments provided above or below, the process of the invention comprises: a) contacting AuNRs coated by a shell comprising silica with Zr propoxide and 2,5-dimercaptoterephthalic in the presence of a solvent; b) pre-heating the mixture obtained from step a) to a temperature from 110 °C to 120 °C; c) spray drying the pre-heated mixture obtained from step b) at a temperature between 175 and 185 °C to yield dry composite material; d) collecting the dry composite material; and e) contacting the composite material with iodine. In particular embodiments the solvent is DMF. In particular embodiments the pre-heating temperature is 115 °C. In particular embodiments the spray drying temperature is 180 °C. In particular embodiments the spray-drying is done in the presence of acetic acid.

The composite of the invention usually acquires the form of particles in the shape of a rounded bead. Said rounded beads are usually spherical or substantially spherical. The size of the composite beads may range from a hundred nm to a few microns. In some embodiments the composite material are beads of size from about 0.1 µm to about 400 µm, for example from 0.1 µm to 20 µm or from 0.1 µm to 10 µm or from 0.5 to 5 µm or from 0.5 to 3 µm or from 0.5 to 2 µm, for example around 1 µm. The size of the particles when said particles are spherical or substantially spherical, such as beads, usually refers to the diameter. The size of the composite particles may refer to a distribution of sizes around the specified size. The size of the composite particles may be determined by methods well known in the state of the art. Field Emission Scanning Electron Microscope (FESEM) and Transmission Electron Microscopy (TEM) images of exemplary composite beads of the invention are shown in figure 1.

In one embodiment of the second aspect, optionally in combination with any of the embodiments provided above or below, the contacting of the formed PT-NPs@MOF composite with iodine is performed at conditions appropriate for the adsorption of the iodine in the pores of the composite. This contacting step may also be described as "loading". The loading step usually takes place in a solid-gas phase via I₂ sublimation or in a solid-liquid phase adsorption. In another embodiment of the second aspect, optionally in combination with any of the embodiments provided above or below, the loading takes place for a time selected between 1 hour and 72 hours, more particularly between 7 hours and 48 hours, and still more particularly between 12 hours and 24 hours.

The third aspect of the invention moreover provides a composite obtainable or obtained by the process of the second aspects. All embodiments described for the second aspect may also apply to this third aspect.

The advantageous properties of the iodine-containing composite of the first or third aspects of the invention were maintained when the composite was incorporated to a polymer. As mentioned above, this is particularly convenient because it enables preparing biocidal polymeric blends to be used in many applications, for example, for coating medical devices or hospital surfaces. Surprisingly, the inventors have also observed that release of iodine via sublimation was effective to inhibit microorganisms that were not in contact with the PT-NP@MOF(I₂)-containing polymer (see experimental section 2.4). Thus, the fourth aspect of the invention provides polymeric blends comprising PT-NP@MOF(I₂) composite with enhanced antimicrobial activity. In a particular embodiment of the fourth aspect of the invention, optionally in combination with any of the embodiments provided above or below, the polymer blend comprises AuNR@SiO₂@MOF(I₂) composite.

In one embodiment of the fourth aspect of the invention, optionally in combination with any of the embodiments provided above or below, the polymer blend comprises a polymer selected from the group consisting of polyvinylidene difluoride (PVDF), polyurethane, silicon, polyether sulfone, and combinations or co-polymers thereof. In one particular embodiment, optionally in combination with any of the embodiments provided above or below, the polymer blend comprises PVDF. In another particular embodiment, the polymer blend consists of PVDF and AuNR@SiO₂@MOF(I₂) composite.

In most embodiments of the polymer blend defined in the fourth aspect of the invention, optionally in combination with any of the embodiments provided above or below, the PT-NP@MOF(I₂) is entrapped in the polymer. In a particular embodiment of the fourth aspect of the invention, optionally in combination with any of the embodiments provided above or below, the content of PT-NP@MOF(I₂) composite ranges from 1 to 60% (w/w) of the polymer blend, in particular from 5 to 50% (w/w) of the polymer blend. In a particular embodiment of the fourth aspect of the invention, optionally in combination with any of the embodiments provided above or below, the PT-NPs are AuNRs coated by a shell comprising silica, and the content of AuNR@SiO₂@MOF(I₂) composite ranges from 1 to 60% (w/w) of the polymer blend, in particular, from 5 to 50% (w/w) of the polymer blend, more in particular from 20 to 50% (w/w) of the polymer blend, for example, 8%, 25%, or 46% (w/w) of the polymer blend. In one embodiment of the fourth aspect of the invention, optionally in combination with any of the embodiments provided above or below, the polymer blend is in the form of a film. All other embodiments described for the composites of the first or third aspects of the invention may also apply to the polymer blend of the fourth aspect.

A fifth aspect of the invention provides a coating material comprising a composite as defined in the first or third aspects or a polymer blend as defined in the fourth aspect. In one embodiment of the fifth aspect of the invention, optionally in combination with any of the embodiments provided above or below, the coating material is in the form of a film. All other embodiments described for the first, third and/or fourth aspects of the invention also apply to the coating material of the fifth aspect.

A sixth aspect of the invention refers in particular to a medical device, medical equipment, hospital surface, or filter comprising a composite as defined in the first or third aspects, or a polymer blend as defined in the fourth aspect, or a coating as defined in the fifth aspect. But this sixth aspect also contemplates any surface which is coated by the polymer blend of the second aspect. In particular embodiments, the surface is a hospital surface, for example, the surface of furniture, medical devices, medical equipment, toilets, showers or filters. One embodiment of the sixth aspect, optionally in combination with any of the embodiments provided above or below, provides a medical device comprising a composite as defined in the first or third aspects, or a polymer blend as defined in the fourth aspect, or a coating as defined in the fifth aspect. Non-limiting medical devices that may contain the antimicrobial composite, polymer blend or coating of the invention are catheters, tongue depressors, thermometers, syringes, prostheses, stents, needles, surgical instruments, endoscopes, clamps, drapes, or gloves. In a particular embodiment of the sixth aspect, optionally in combination with any of the embodiments provided above or below, the medical device is a catheter. All other embodiments described for the first, third, fourth and/or fifth aspects of the invention may also apply to the sixth aspect.

As mentioned above, the PT-NPs entrapped within the pores of the MOF particles enable a photothermal release of iodine triggered by appropriate radiation. The PT-NP@MOF(I₂) of the invention heat up rapidly upon appropriate irradiation, triggering the release of the iodine by sublimation. Remarkably, it also cools down just as quickly once the radiation is been turned off. This property of equivalently rapid heating and cooling is advantageous for precise switching (on/off) of iodine release. In particular embodiments, the composite is AuNR@SiO₂@MOF, more particularly, AuNR@SiO₂@UiO-66, and the radiation is NIR light.

For the sake of completeness the present application also contemplates the following numbered embodiments:
1. A composite comprising photothermal nanoparticles entrapped in a metal-organic framework (MOF).
2. The composite according to embodiment 1, wherein the metal organic framework belongs to the UiO family.
3. The composite according to the previous embodiment, wherein the UiO MOF is selected from the group consisting of UiO-66, UiO-67, UiO-68, and UiO-69.
4. The composite according to the previous embodiment, wherein the UiO MOF is UiO-66.
5. The composite according to any one of the previous embodiments, wherein the MOF is functionalized.
6. The composite according to any one of the preceding embodiments, wherein the photothermal nanoparticles are gold nanoparticles coated by a shell comprising silica.
7. The composite according to the preceding embodiment, wherein the shell comprising silica has a thickness from 10 to 100 nm.
8. The composite according to the preceding embodiment, wherein the shell comprising silica has a thickness from 25 to 60 nm, particularly, a thickness of 30 nm.
9. The composite according to any one of embodiments 6-8, wherein the shell consists of silica.
10. The composite according to any one of embodiments 6-9, wherein the Au content in the nanoparticle ranges from 1 to 50% (w/w).
11. The composite according to the preceding embodiment, wherein the Au content in the nanoparticle ranges from 10 to 30 (w/w), for example, 23 % (w/w).
12. The composite according to any one of embodiments 6-11, wherein the gold nanoparticles are gold nanorods.
13. The composite according to the preceding embodiment, wherein the AuNRs have a length from 10 to 300 nm and a width from 1 to 50 nm, for example, 80 nm in length and 15 nm in width.
14. The composite according to any one of the preceding embodiments, wherein the photothermal nanoparticles have a maximum localized surface plasmon resonance (LSRP) peak ranging from 700 to 1000 nm, for example, at 810 nm.
15. The composite according to any one of the preceding embodiments, wherein the content of PT-NPs in the composite ranges from 1 to 50% (w/w).
16. The composite according to the preceding embodiment, wherein the content of PT-NPs in the composite ranges from 5 to 30% (w/w), for example, 9 % (w/w).
17. The composite according to any one of the preceding embodiments, further comprising iodine.
18. The composite according to the preceding embodiment, wherein the iodine is adsorbed in the pores of the composite.
19. The composite according to any one of embodiments 17-18, wherein the content of iodine is from 0.05 to 5 mg iodine per mg composite.
20. The composite according to the preceding embodiment, wherein the content of iodine is from 0.2 to 1.5 mg iodine per mg composite.
21. A method for preparing a composite as defined in any one of embodiments 1-16, which comprises:
   (i) spray drying photothermal nanoparticles with metal ions and an organic ligand which is at least bidentate in the presence of a solvent;
   (ii) collecting the dry composite.
22. The method according to the preceding embodiment, wherein the conditions to carry out the spray drying comprise a temperature selected from 80 to 230 °C.
23. The method according to the preceding embodiment, wherein the conditions to carry out the spray drying comprise a temperature selected from 140 to 200 °C.
24. The method according to the preceding embodiment, wherein the conditions to carry out the spray drying comprise a temperature selected from 150 to 200 °C.
25. The method according to the preceding embodiment, wherein the conditions to carry out the spray drying comprise a temperature selected from 170 to 190 °C, for example 180 °C.
26. The method according to any one of embodiments 21-25, wherein the photothermal nanoparticles, the metal ions and the organic ligand which is at least bidentate are contacted before spray-drying in the presence of a solvent and preheated at a temperature selected from 80 °C to 140 °C.
27. The method according to the preceding embodiment, wherein the photothermal nanoparticles, the metal ions and the organic ligand which is at least bidentate are contacted before spray-drying in the presence of a solvent and preheated at a temperature selected from 100-130 °C.
28. The method according to any one of embodiments 21-27, wherein the photothermal nanoparticles are gold nanoparticles coated by a shell comprising silica.
29. The composite according to the preceding embodiment, wherein the shell comprising silica has a thickness from 10 to 100 nm.
30. The method according to the preceding embodiment, wherein the shell comprising silica has a thickness from 25 to 60 nm, particularly, a thickness of 30 nm.
31. The method according to any one of embodiments 28-30, wherein the shell consists of silica.
32. The method according to any one of embodiments 28-31, wherein the Au content in the nanoparticle ranges from 1 to 50% (w/w).
33. The method according to the preceding embodiment, wherein the Au content in the nanoparticle ranges from 10 to 30 (w/w), for example, 23 % (w/w).
34. The method according to any one of embodiments 28-33, wherein the gold nanoparticles are gold nanorods.
35. The method according to the preceding embodiment, wherein the AuNRs have a length from 10 to 300 nm and a width from 1 to 50 nm, for example, 80 nm in length and 15 nm in width.
36. The method according to any one of embodiments 28-35, wherein the photothermal nanoparticles have a maximum localized surface plasmon resonance (LSRP) peak ranging from 700 to 1000 nm, for example, at 810 nm.
37. The method according to any one of embodiments 21-36, wherein the content of PT-NPs in the composite ranges from 1 to 50% (w/w).
38. The method according to the preceding embodiment, wherein the content of PT-NPs in the composite ranges from 5 to 30% (w/w), for example, 9 % (w/w).
39. The method according to any one of embodiments 21-38, wherein the metal ion is selected from the group consisting of Zr, Zn, Cu, Fe, Gd, Mg, and mixtures thereof
40. The method according to the preceding embodiment, wherein the metal ion is Zr.
41. The method according to any one of embodiments 21-40, wherein the at least one organic ligand which is at least bidentate is selected from the group consisting of formic acid, acetic acid, oxalic acid, propanoic acid, butanedioic acid, terephthalic acid, (E)-butenedioic acid, benzene-1,4-dicarboxylic acid, benzene-1,3-dicarboxylic acid, benzene-1,3,5-tricarboxylic acid, 2-amino-1,4-benzenedicarboxylic acid, 2-bromo-1,4-benzenedicarboxylic acid, biphenyl-4,4'-dicarboxylic acid, biphenyl-3,3',5,5'-tetracarboxylic acid, biphenyl-3,4',5-tricarboxylic acid, 2,5-dihydroxy-1,4-benzenedicarboxylic acid, 1,3,5-tris(4-carboxyphenyl)benzene, (2*E*,4*E*)-hexa-2,4-dienedioic acid, 1,4-naphthalenedicarboxylic acid, naphthalene-2,6-dicarboxylate, pyrene-2,7-dicarboxylic acid, 4,5,9,10-tetrahydropyrene-2,7-dicarboxylic acid, aspartic acid, glutamic acid, adenine, 4,4'-bypiridine, pyrimidine, pyrazine, 1,4-diazabicyclo[2.2.2]octane, pyridine-4-carboxylic acid, pyridine-3-carboxylic acid, imidazole, 1*H*-benzimidazole, 2-methyl-1*H*-imidazole, and 4-methyl-5-imidazolecarboxaldehyde.
42. The method according to the preceding embodiment, wherein the organic ligand a dicarboxylic acid.
43. The method according to the preceding embodiment, wherein the organic ligand is terephthalic acid.
44. The method according to any one of embodiments 21-43, wherein the solvent is selected from water, ethanol, N,N-dimethylformamide (DMF), and mixtures thereof.
45. The method according to the preceding embodiment, wherein the solvent comprises DMF.
46. The method according to the preceding embodiment, wherein the solvent is DMF.
47. The method according to any one of embodiments 21-46, wherein the reaction time in the spray dryer is between 3 minutes and 4 hours.
48. The method according to the preceding embodiment, wherein the reaction time in the spray dryer is between 10 minutes and 30 minutes.
49. The method according to any one of embodiments 21-48, further comprising the addition of a modulator.
50. The method according to embodiment 49, wherein the modulator is a base.
51. The method according to embodiment 49, wherein the modulator is an acid.
52. The method according to the preceding embodiment, wherein the modulator is acetic acid.
53. A method for preparing an iodine-containing composite as defined in any one of embodiments 17-20, which comprises preparing a composite by the method defined in any one of embodiments 21-52 and contacting said composite with iodine.
54. The method according to the preceding embodiment, wherein the iodine is gaseous diiodine.
55. A composite obtainable by the method as defined in any one of embodiments 21-52.
56. An iodine-containing composite obtainable by the method as defined in any one of embodiments 53-55.
57. A polymer blend comprising a composite as defined in any one of embodiments 17-20 or 56 and at least one polymer.
58. A polymer blend according to the preceding embodiment, which comprises a polymer selected from the group consisting of polyvinylidene difluoride (PVDF), polyurethane, silicon, polyether sulfone, and combinations or co-polymers thereof.
59. A polymer blend according to the preceding embodiment, which comprises PVDF.
60. A polymer blend according to any one of embodiments 57-59, wherein the content of composite ranges from 5 to 50% (w/w) of the polymer blend.
61. A polymer blend according to the preceding embodiment, wherein the content of composite ranges from 20 to 50% (w/w) of the polymer blend.
62. A coating material comprising a composite as defined in any one of embodiments 17-20 or 56, or alternatively, a polymer blend as defined in any one of embodiments 57-61.
63. A medical device, medical equipment, hospital surface or filter comprising a composite as defined in any one of embodiments 17-20 or 56, a polymer blend as defined in any one of embodiments 57-61, or a coating material as defined in embodiment 62.
64. A medical device according to the preceding embodiment, which is selected from the group consisting of catheter, tongue depressor, thermometer, syringe, prosthesis, stent, needle, surgical instrument, endoscope, clamp, drape, and glove.
65. The medical device according to the preceding embodiment, which is a catheter.
66. Use of a composite as defined in any one of embodiments 17-20 or 56 as antimicrobial agent in polymer blends for the coating of surfaces.
67. A composite as defined in any one of embodiments 17-20 or 56 for use as antimicrobial agent.
68. A method to protect a surface against microbes which comprises applying on the surface a composite as defined in any one of embodiments 17-20 or 56, a polymer blend as defined in any one of embodiments 57-61, or a coating material as defined in embodiment 62.
69. The method according to embodiment 68, wherein the method comprises the release of iodine.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

### Examples

### 1. Experimental Section

### 1.1. Materials and methods

Zirconium (IV) propoxide solution (70% (w/w)) in 1-propanol, terephthalic acid, gold(III) chloride hydrate, tetraethyl orthosilicate ≥99.0% (TEOS), glacial acetic acid, sodium hydroxide, cetyltrimethylammonium bromide, sodium borohydride, silver nitrate, ascorbic acid, absolute ethanol ≥99.8% and ammonium hydroxide 28% were purchased from Sigma Aldrich. N,N-dimethylformamide (DMF), methanol, ethanol, sulfuric acid and acetone were purchased from Fisher Scientific. All the reagents were used without further purification. Deionized water, obtained with a Milli-Q^{®} system (18.2 MΩ cm), was used when required. Powder X-ray diffraction (PXRD) patterns were collected on an X'Pert PRO MPDP analytical diffractometer (Panalytical) at 45 kV and 40 mA using CuKa radiation (λ = 1.5419 Å). Nitrogen adsorption and desorption measurements were collected at 77 K using an ASAP 2460 (Micromeritics). Temperature for N₂ isotherms measurement was controlled by using a liquid nitrogen bath. Field-emission scanning electron microscopy (FE-SEM) images were collected on a Magellan 400 L scanning electron microscope (FEI) at an acceleration voltage of 5.0 KV. Transmission electron microscopy (TEM) images were collected on a Tecnai G2 F20 microscope (FEI) at 200 kV. ICP-MS experiments were performed on an Agilent 7500. Laser irradiation was performed utilizing a Lasiris Powerline 810 (Coherent). Thermal imaging was obtained using a PI 450 (Optris) infrared camera. Inductively Coupled Plasma - Optical Emission Spectroscopy (ICP-MS) measurements were performed on an Agilent 7500. Thermogravimetric analysis (TGA) experiments were run on a Perkin-Elmer-TGA-8000G, under N₂ atmosphere.

### 1.2. Synthesis of AuNRs

The AuNRs were synthesized through a seed-mediated growth procedure adapted from the literature (Sau et al, 2004). In a typical synthesis, 273.4 mg of CTAB were dissolved in 7.5 mL H₂O inside a 15 mL scintillation vial under magnetic stirring. Next, 2 mL of a HAuCl₄ (24 mM) solution were added, and the resultant mixture was stirred for 10 s. Afterwards, 0.6 mL of ice-cold aq. NaBH₄ (10 mM) was added, and the mixture was stirred at 600 rpm for 2 min. Finally, the magnetic stir-bar was removed, and the seed solution was allowed to react for 3 h at 28 °C. In parallel, 437.4 mg CTAB were dissolved in 10 mL of H₂O inside a 20 mL scintillation vial under magnetic stirring. Then, sequentially, 204 µL of aq. HAuCl₄ (24 mM), 0.2 mL of aq. H₂SO₄ (0.5 M), 75 µL of aq. AgNO₃ (0.01 M) and 80 µL of aq. ascorbic acid (0.1 M) were added into the solution, with 10 s of stirring between each addition. Next, 24 µL of the above-prepared seed solution was added into this solution, and the resultant mixture was vigorously stirred for 30 s. The magnetic stir-bar was removed, and the mixture was left to react at 28 °C for 12 h. Finally, the resulting AuNRs were separated through centrifugation, and then washed twice in Milli-Q^{®} water to remove any excess CTAB.

### 1.3. Coating of AuNRs with a silica shell

The AuNRs were coated with a silica shell following a slightly modified combination of reported procedures (Stöber et al, 1968; Hinman et al, 2016; Wu et al, 2015). Thus, the synthesized AuNRs were dispersed in 10 mL of aqueous 0.6 mM CTAB solution, and the resulting mixture was stirred for 12 h. The pH of the AuNR dispersion was then adjusted to 10.0 to 10.4 using aq. NaOH solution (0.1 M), and the mixture was stirred for 30 min. Afterwards, 90 µL of freshly prepared 20% (v/v) TEOS in methanol was added, and the resulting solution was stirred gently at 70 rpm for a further 30 min. Finally, the magnetic stir-bar was removed, and the reaction mixture was left at 28 °C overnight. The obtained silica-coated rods (hereafter named AuNR@SiO₂) were washed three times by centrifugation and redispersion in ethanol. The thickness of the silica-shell coating was confirmed by FE-SEM/TEM imaging to be 17 ± 2 nm. The silica coating was thickened following a modified Stöber process (Stöber et al, 1968). First, the AuNR@SiO₂ were concentrated into 2 mL of absolute ethanol and then, they were redispersed under mild sonication. Later, AuNR@SiO₂ were placed into a 40 mL of absolute ethanol that contained 1.2 mL of ammonia NH₄OH (28%) and 200 µL of a TEOS solution prepared in ethanol with a final concentration of 100 mM. The mixture was left under mild stirring overnight. The final thickness of the silica-shell coating was 30 nm ± 3 nm. Finally, the obtained AuNR@SiO₂ were washed to eliminate unreacted products, three times with methanol and three times with DMF, redispersed in 2 mL DMF and finally, stored in a refrigerator until used.

### 1.4. Synthesis of AuNR@SiO₂@UiO-66 composite microbeads

The AuNR@SiO₂@UiO-66 microbeads were synthesized using a slightly modified version of a previously reported spray-drying method (Boix et al, 2020). Briefly, terephthalic acid (1 mmol, 166 mg), glacial acetic acid (4 mL), the dispersion of AuNR@SiO₂ particles in DMF (2 mL) and a 70% (w/w) solution of zirconium (IV) propoxide (Zr(OPrn)₄) in 1-propanol (1 mmol, 309 µL) were sequentially added to a flask containing 10 mL of DMF. The resulting mixture was injected into a coil-flow reactor (inner diameter: 3 mm) at a feed rate of 2.4 mL min⁻¹ at 115 °C. The resulting pre-heated solution was then spray-dried at 180 °C (flow rate: 336 mL min-1), using a B-290 Mini Spray-Dryer (BÜCHI Labortechnik; spray cap hole diameter: 0.5 mm). The resulting AuNR@SiO₂@UiO-66 microbeads were dispersed in DMF, washed twice with DMF and ethanol, and finally, dried for 12 h at 85 °C under dynamic vacuum overnight. The percentage of AuNR@SiO₂ nanoparticles entrapped within the microbeads was determined by ICP-MS to be 9% (w/w). To synthesize the pristine UiO-66 microbeads, the above procedure was repeated without the addition of the AuNR@SiO₂ particles.

### 1.5. Fabrication of films containing AuNR@SiO₂@UiO-66 microbeads

All the films were prepared following a with slightly modified version of a previously reported procedure (Liu et al, 2017). To fabricate the films containing AuNR@SiO₂@UiO-66 microbeads at 8%, 25% or 46% (w/w), 25 mg, 75 mg or 125 mg of the microbeads, respectively, were thoroughly dispersed into 0.125 mL, 0.375 mL or 0.625 mL of DMF, respectively, and then sonicated for 15 min. Simultaneously, 225 mg, 175 mg or 125 mg of PVDF, respectively, were dissolved in 1.125 mL, 0.875 mL or 0.625 mL of DMF, respectively, by heating at 60 °C. For each microbead-loading level, the two solutions were mixed, and then stirred for 20 min, and then the resulting mixture was drop-casted onto a glass surface, and placed inside an oven preheated to 140 °C for 30 min. The resulting films were detached from the glass slide by submerging them in water, and then placed inside an autoclave filled with methanol. After solvent exchange at 85 °C overnight inside the autoclave, the resultant clean films were recovered, and then dried under dynamic vacuum at 85 °C.

### 1.6. Photothermal activity

The photothermal activity of the synthesized microbeads was confirmed with a thermal camera by irradiating them at 52 mW cm⁻², 224 mW cm⁻² or 1000 mW cm⁻², which corresponded to a distance between the laser and the microbeads of 15 cm, 7 cm or 2 cm, respectively.

### 1.7. Iodine uptake

The iodine-adsorption studies were done by combining either 6 mg of microbeads or a 2-cm² portion of film, and 10 mg of elemental iodine, into two different glass tubes (previously tared) with one end sealed. Then, the two containers were introduced into a scintillation vial purged with Ar to remove any moisture that could interfere with gravimetric measurements. The vial was then heated to 75 °C inside an oven for 20 h. At different periods of time, a small aliquot of microbeads, or a small piece of the film, were collected from the vial, and the uptake of iodine in each sample was determined by TGA.

### 1.8. Light-triggered release of iodine

In a typical experiment, either 0.3 mg of microbeads or a small piece (∼ 1 mg) of film loaded with iodine were placed inside a TGA pan, which was then loaded into the TGA analyzer pre-set to 30 °C. The samples were then left for 10 min to enable stable measurements. Afterwards, the samples were irradiated for 35 min under NIR light at intensities of 52 mW cm⁻², 224 mW cm⁻² or 1000 mW cm⁻², and loss in weight of each sample was recorded. The experiments were repeated three times for each sample.

### 1.9. Stepwise light-triggered release of iodine by on/off switching

The on/off switching experiment began with a small piece (∼ 1 mg) of an iodine-loaded film being placed inside a TGA pan, which was then loaded into a TGA analyzer pre-set to 30 °C. The sample was then left for 10 min to enable stable measurements. Next, the film was irradiated for 1 min under NIR light at intensities 52 mW cm⁻² or of 224 mW cm⁻², after which point the laser was turned off for 3 min. The weight loss of the sample was continuously recorded throughout the process. This on/off cycle was repeated 50 times.

### 1.10. Antibacterial activity assays

The antibacterial activity of UiO-66 microbeads, AuNR@SiO₂@UiO-66 microbeads and their corresponding composite films was assessed in different experiments. This began with a disk-diffusion experiment, in which cultures of E. coli (ATCC 25922) and S. aureus (ATCC 25923) were prepared in Luria-Bertani (LB) agar plates, and then incubated at 37 °C for 18 h. Next, bacterial suspensions were prepared with PBS 1x and adjusted at DO550nm = 0.2 (equivalent to 10⁸ CFU/mL). The bacterial suspensions were smeared on the LB plates using cotton swabs that had been dipped in the suspensions. Whatman^{®} disks (diameter: 6 mm) were aseptically deposited onto the LB agar surface, and UiO-66 microbeads or AuNR@SiO₂@UiO-66 microbeads (∼ 1-1.6 mg), with or without iodine, were placed over the disks. In the case of the composite films containing AuNR@SiO₂@UiO-66 microbeads at 8%, 25% or 46% (w/w), with or without iodine, were directly placed on the LB agar surface. Some of these samples were irradiated for 5 min under NIR light at an intensity of 224 mW cm⁻². The plates were left for at 4 °C for 1 h, and then incubated at 37 °C for 18 h. Each experiment was done in duplicate.

Next, the antibacterial performance of the composite films upon iodine release through the air via sublimation provoked by the passive or by the active (light-triggered) iodine-release mechanism was ascertained. To this end, each composite film (size: 1 cm²) containing either 8% or 25% (w/w) AuNR@SiO₂@UiO-66(I₂) microbeads loaded with iodine was positioned over a plate cover, and then an agar plate inoculated with a bacterial suspension was placed face down on it. The distance between the composite film and the agar plates was ca. 1 cm. Then, three different experiments were performed. In the first one, the two plates were incubated together at 37 °C for 18 h. In the second experiment, the composite film was irradiated with NIR light (224 mW cm⁻²) for 5 min, during which time the plates were rotated. Next, the composite film was immediately removed, and the culture agar plate was sealed with parafilm and incubated at 37 °C for 18 h. Finally, the third experiment was nearly identical to the second one, except that the irradiation step was skipped. In all the experiments, additional set-ups using composite films that did not contain iodine, lacking irradiation and/or not including the removal step were employed as controls. In all cases, the plates were examined to detect and measure (diameters) the growth-inhibition zones.

### 2 Results and discussion

### 2.1. Materials synthesis and characterization

AuNRs were prepared following a modified literature procedure (Sau et al, 2004). Thus, a gold seed solution was initially prepared following the traditional cetyltrimethylammonium bromide (CTAB)-stabilized synthesis. The synthesized seeds were then placed into a growth solution with trace amounts of AgNO₃, and left overnight to develop into AuNRs. The synthesized rods were washed with Mili-Q water upon centrifugation. Field-emission scanning electron microscopy (FE-SEM), transmission electron microscopy (TEM) and UV-Vis spectroscopy revealed the formation of AuNRs with dimensions (length x width) of ∼ 80 nm x 15 nm (aspect ratio, AR=5), and with a maximum localized surface plasmon resonance (LSRP) peak at 810 nm. The AuNRs were coated with a silica shell following a modified Stöber process through slightly adapted versions reported (Stöber et al, 1968; Hinman et al, 2016; Wu et al, 2015). Briefly, a dispersion of synthesized AuNRs in a diluted CTAB solution (pH = 10) was reacted overnight with tetraethyl orthosilicate (TEOS) in the presence of 01M of a sodium hydroxide solution as a catalyst in a methanolic solution. The resulting AuNRs coated with a silica shell (AuNR@SiO₂) of a thickness of 17 ± 2 nm were centrifuged, and then thoroughly washed with ethanol. Finally, the silica shell thickness of AuNR@SiO₂ was increased by dispersing them in an ethanolic solution of ammonia and TEOS under mild stirring. The final AuNR@SiO₂ had an Au content of 23% and a shell thickness of 30 nm ± 3 nm, as confirmed by inductively coupled plasm-mass spectrometry (ICP-MS), FE-SEM and scanning transmission electron microcopy (STEM) (Figure 1a). Importantly, this SiO₂ coating was required to prevent degradation of the AuNRs upon exposure to iodine: in previous studies, we had discovered that naked AuNRs entrapped in UiO-66 crystals were not stable to iodine at 75 °C, and that they became etched even after only brief exposure. To this end, a coating thickness of around 30 nm of SiO₂ was found to be optimal for protection.

Next, AuNR@SiO₂@UiO-66 composite microbeads were synthesized following a spray-drying methodology previously reported (Figure 1a) (Boix et al, 2020). In a typical synthesis, a dispersion of AuNR@SiO₂ and the UiO-66 precursors (terephthalic acid and zirconium(IV) propoxide) dissolved in *N,N*-dimethylformamide (DMF) were injected into a coil-preheater, and then spray-dried at 180 °C. The synthesis was repeated without AuNR@SiO₂ to afford pristine UiO-66 microbeads. Powder X-ray diffraction (PXRD) and FE-SEM revealed the formation of spherical microbeads of both UiO-66 and AuNR@SiO₂@UiO-66 (Figure 1b,d). Moreover, the successful entrapment of AuNR@SiO₂ in UiO-66 microbeads was confirmed by high-angle annular dark-field (HAADF-STEM) imaging (Figure 1c). The content of Au in the composite microbeads was estimated by first digesting them in an 8:3 mixture of 70% HNO₃ and HF at 230 °C, and then analyzing the byproducts by ICP-MS, from which an AuNR@SiO₂ content of 9% was determined. Nitrogen isotherm adsorption measurements revealed BET surface areas of 1040 m² g⁻¹ for the UiO-66 microbeads and 750 m² g⁻¹ for the AuNR@SiO₂@UiO-66 microbeads (Figure S3). Note that this latter value is close to the expected value (946 m² g⁻¹), as calculated based on the loading percentage of AuNR@SiO₂ within the AuNR@SiO₂@UiO-66 microbeads.

Once the AuNR@SiO₂@UiO-66 microbeads were synthesized, their photothermal properties were studied to ascertain their potential utility as a photo-activatable system for release of iodine. To this end, UiO-66 and AuNR@SiO₂@UiO-66 microbeads were separately irradiated with NIR light (λ = 810 nm) at increasing intensity (52 mW cm⁻², 224 mW cm⁻² and 1000 mW cm⁻²) and the temperature was monitored using a thermal camera (Table S1). The pristine UiO-66 microbeads did not respond photothermally to the NIR light; their temperature remained constant throughout the irradiation. Contrariwise, the AuNR@SiO₂@UiO-66 microbeads heated up rapidly (in less than 60 s): at an intensity of 52 mW cm⁻², up to 90 °C; at 224 mW cm⁻², up to 150 °C; and finally, at 1000 mW cm⁻², up to 274 °C. Remarkably, they also cooled down just as quickly, as demonstrated once the NIR light had been turned off. This property of equivalently rapid heating and cooling is critical for precise switching (on/off) of triggered release.

### 2.2. Adsorption and NIR-light triggered release of iodine

The iodine-uptake capacity of the pristine UiO-66 microbeads and the composite AuNR@SiO₂@UiO-66 was determined utilizing a solid-gas adsorption setup. The sublimation chamber comprised two glass tubes of known mass, sealed at one end and placed inside a scintillation vial, into which the microbeads and the elemental iodine were separately introduced. Next, the sublimation chamber was purged with Ar gas to evacuate any humidity that could induce errors in gravimetric measurements, and the vial was placed inside an oven pre-heated to 75 °C. The optimum loading time was determined by periodically removing a sample of UiO-66 microbeads from the oven at different time intervals and carefully weighing the glass tube containing it. This experiment was also repeated with a sample of AuNR@SiO₂@UiO-66 microbeads. The resulting isothermal curves revealed a linear adsorption of iodine for the first 10 h, followed by saturation and finally, plateau of the adsorption after 20 h (Figure 2a). The exact uptake of iodine was confirmed by gravimetric experiments of samples after 20 hours of adsorption, revealing a maximum uptake of 1.1 mg_{I2} mg_{composite}⁻¹ for the pristine UiO-66 microbeads, and of 0.9 mg_{I2} mg_{composite}⁻¹ for the composite AuNR@SiO₂@UiO-66 microbeads (Figure S5). PXRD and HAADF-STEM imaging of UiO-66 microbeads and AuNR@SiO₂@UiO-66 microbeads loaded with iodine did not reveal any signs of material degradation.

Next, the NIR light-triggered release of iodine was studied using a custom set-up inside a thermogravimetric analyzer. To this end, UiO-66(I₂) and AuNR@SiO₂@UiO-66(I₂) microbeads were placed inside the unit, allowed to stand undisturbed for 5 min to stabilize their weight, and finally, irradiated (at 52 mW cm⁻¹, 224 mW cm⁻¹ and 1000 mW cm⁻¹) for 35 min. During irradiation, the weight of the microbeads was recorded to detect the loss of iodine. As expected, upon NIR irradiation, the composite of UiO-66(I₂) microbeads with entrapped AuNR@SiO₂ showed greater iodine-release than did the UiO-66(I₂) (Figure 2b-d) microbeads alone. Thus, for AuNR@SiO_{2@}UiO-66(I₂), the iodine-release values were 28% (0.26 mg_{I2} mg_{composite}⁻¹) at 52 mW cm⁻¹ irradiation; 48% (0.44 mg_{I2} mg_{composite}⁻¹) at 224 mW cm⁻¹; and 74% (0.67 mg_{I2} mg_{composite}⁻¹) at 1000. mW cm⁻¹. In contrast, for UiO-66(I₂), the values were 8% (0.09 mg_{I2} mg_{composite}⁻¹) at 52 mW cm⁻¹ irradiation; 16% (0.18 mg_{I2} mg_{composite}⁻¹) at 224 mW cm⁻¹ irradiation; and 45% (0.49 mg_{I2} mg_{composite}⁻¹) at 1000 mW cm⁻¹ irradiation. Note that, although UiO-66(I₂) released much less iodine than did AuNR@SiO_{2@}UiO-66(I₂) upon NIR irradiation, it did release more iodine than expected, given the negligible photothermal properties of pristine UiO-66. This can be attributed to the intrinsic photothermal properties of iodine, which led to UiO-66(I₂) being heated up to 44 °C, when irradiated at 52 mW cm⁻²; 90 °C, at 224 mW cm⁻²¹; and 120 °C, at 1000 mW cm⁻². For comparison, iodine-release from the corresponding samples without NIR irradiation was also recorded. Without irradiation, the iodine-loss for AuNR@SiO₂@UiO-66(I₂) microbeads was 3% (0.025 mg_{I2} mg_{composite}⁻¹) and for the UiO-66(I₂) microbeads, 4% (0.034 mg_{I2} mg_{composite}⁻¹) (results not shown).

### 2.3. Integration of Au@SiO₂@UiO-66 microbeads into PVDF films

Having confirmed the NIR-triggered release of iodine from our AuNR@SiO₂@UiO-66(I₂) microbeads, we then sought to integrate them into a polymeric film, with the ultimate aim of fabricating a coating for antibacterial applications in which sterilization could be selectively triggered. To this end, AuNR@SiO₂@UiO-66 microbeads were entrapped into a polyvinylidene difluoride (PVDF) film using a previously reported procedure (Liu et al, 2017). In a typical synthesis, the necessary amount AuNR@SiO₂@UiO-66 microbeads [10%, 30% and 50% (w/w)] were dispersed in a PVDF solution in DMF and drop-cast onto a glass surface. The DMF was evaporated off by placing the glass slide in an oven (140 °C) for 30 min. The fabricated films were then thoroughly washed with methanol and finally, dried under vacuum overnight. For comparison, a PVDF film without AuNR@SiO₂@UiO-66 microbeads also was prepared by the method. FE-SEM imaging of the cross-section of each film revealed a thickness of 140 µm (Figure 3a), in which the AuNR@SiO₂@UiO-66 microbeads retained their morphology and were homogeneously dispersed throughout (Figure 3b-e). Moreover, PXRD analysis of the three films containing the microbeads revealed that their crystalline structure had not been affected during film formation (Figure 3f). Quantification of the exact mass percentage of AuNR@SiO₂@UiO-66 microbeads inside the films by ICP-MS analysis revealed values of 8%, 25% and 46% (w/w) for the films fabricated with 10%, 30% and 50% (w/w) of microbeads, respectively.

To evaluate the iodine-uptake capacity of the three composite films (Figure 4a), we started by measuring the capacity of a section (2 cm²) of the bare film (*i.e.* film lacking microbeads) to adsorb iodine using the same procedure as described for the AuNR@SiO₂@UiO-66 microbeads, in which we quantified the iodine-loading by thermogravimetric analysis (results not shown). The bare film barely adsorbed iodine (5·10⁻⁴ mg_{I2} mg_{film}⁻¹). Contrariwise, for similar experiments performed on sections (2 cm²) of films loaded with microbeads, the following sorption capacities were observed, according to the maximum possible iodine adsorption of the AuNR@SiO₂@UiO-66 microbeads within each film: at 8% microbead-loading, 0.012 mg_{I2} mg_{film}⁻¹ (17% of expected value [0.072 mg_{I2} mg_{film}⁻¹]); at 25% loading, 0.159 mg_{I2} mg_{film}⁻¹ (71% of the expected value [0.225 mg_{I2} mg_{film}⁻¹]); and at 46% loading, 0.434 mg_{I2} mg_{film}⁻¹ (105% of the expected value [0.414 mg_{I2} mg_{film}⁻¹) (Figure 4b). These results confirm that AuNR@SiO₂@UiO-66 microbeads can adsorb iodine even when entrapped into PVDF films and illustrate that the adsorption increases with increasing microbead loading. This behavior was attributed to the fact that, as the microbeads content increases, so does the number of interfacial voids formed between the polymer and composite beads, and consequently, so does the permeability. Moreover, microbead loading negatively correlates to the temperature required to fully desorb the iodine from the films: at 8% microbead-loading, that temperature is 240 °C; at 25%, 220 °C; and at 46%, 200 °C. In fact, the final value is very close to that observed for the bare AuNR@SiO₂@UiO-66 microbeads (190 °C), again corroborating a higher number of interfacial voids or greater hierarchical porosity in the composite films.

The triggered release of iodine from the three composite films was also studied by the same methodology that we previously used for AuNR@SiO₂@UiO-66(I₂) microbeads. To this end, the films containing microbeads at different loadings were independently placed inside the TGA setup, allowed to stand undisturbed for 10 min to stabilize their weight, and finally, irradiated at 52 mW cm⁻² or 224 mW cm⁻² for 35 min, while iodine loss was recorded. Upon irradiation, the following values for maximum release of total loaded iodine were recorded: at 8% microbead-loading, 17% (0.002 mg_{I2} mg_{film}⁻¹); at 25% microbead-loading, 18% (0.029 mg_{I2} mg_{film}⁻¹); and at 46% microbead-loading, 17% (0.073 mg_{I2} mg_{film}⁻¹) (Figure 4d). Alternatively, upon irradiation at 224 mW cm⁻², the corresponding recorded values were: at 8% microbead- loading, 28% (0.004 mg_{I2} mg_{film}⁻¹); at 27% microbead-loading, 18% (0.044 mg_{I2} mg_{film}⁻¹); and at 46% microbead-loading, 30% (0.121 mg_{I2} mg_{film}⁻¹) (Figure 4c). In all these composite films, these results obtained represent nearly 63% of the expected release according to their contents of AuNR@SiO₂@UiO-66 microbeads. The fact that less iodine was released from the composite films than from the pure AuNR@SiO₂@UiO-66 microbeads under the same conditions can be explained by the diffusion barrier generated by the polymeric films. Finally, and as in the earlier iodine-loss experiments, the iodine-loss in the absence of irradiation was recorded for comparison, for which the recorded values were: at 8% microbead-loading, 3.1% (4·10⁻⁴ mg_{I2} mg_{film}⁻¹); at 25% microbead-loading, 3.3% (0.006 mg_{I2} mg_{film}⁻¹); and at 46% microbead-loading, 4.1% (0.014 mg_{I2} mg_{film}⁻¹).

Finally, without irradiation, the films containing microbeads at 25% or 46% (w/w) exhibited slow and prolonged release, liberating -50% of their total iodine content over 2 months. This release was faster in the first month, after which the film at 25% microbead- loading released, on average, 2·10⁻⁴ mg_{I2} mg_{film}⁻¹ iodine per day, and the film at 46% microbead-loading, 4·10⁻⁴ mg_{I2} mg_{film}⁻¹ per day.

Once demonstrated that, even when AuNR@SiO₂@UiO-66(I₂) microbeads were incorporated into polymer films, they could still trigger the release of iodine upon NIR irradiation, the possibility was explored of controlling this release via repetitive cycles of on/off switching. To this end, two portions of film containing 25% AuNR@SiO₂@UiO-66(I₂) microbeads were irradiated at 52 mW cm⁻² or 224 mW cm⁻² for 1 min, after which the light was turned off for 3 min. This on/off cycle was ultimately repeated 50 times. At both intensities, the films demonstrated stepwise release of iodine via on/off switching (Figure 5): turning the NIR light on released the iodine, but turning it off slowed the release down. The iodine release occurred in a burst in the first switching cycle (0.006 mg_{I2} mg_{film}⁻¹ at 52 mW cm⁻²; and 0.016 and at 224 mW cm⁻²), decreased until reaching a plateau at the fifteenth cycle, and then stayed constant for the remaining cycles (9·10⁻⁵-8·10⁻⁵ mg_{I2} mg_{film}⁻¹ at 52 mW cm⁻²; and 1.7·10⁻⁴-1,6·10⁻⁴ mg_{I2} mg_{film}⁻¹ at 224 mW cm⁻²) (Figure 5b).

### 2.4. Antibacterial activity

Having demonstrated the controlled release of iodine from the UiO-66 and AuNR@SiO₂@UiO-66 microbeads and composite films, their antibacterial activity was ascertained, beginning with the disk-diffusion method. The UiO-66 microbeads and the AuNR@SiO₂@UiO-66 microbeads lacking iodine did not impair the growth of *Escherichia coli* (gram-negative bacterium) or *Staphylococcus aureus* (gram-positive bacterium), even under irradiation with NIR light. Contrariwise, UiO-66 microbeads and AuNR@SiO₂@UiO-66 microbeads loaded with iodine each led to well-defined inhibition growth zones, both with and without NIR irradiation. The diameters of the respective growth-inhibition zones were higher against S. *aureus* (31 mm to 33 mm) than against *E. coli* (24 mm to 26 mm). Interestingly, there were no significant differences between loaded UiO-66(I₂) or AuNR@SiO₂@UiO-66(I₂) products. Notably, the growth-inhibition obtained with both types of materials were higher than that produced by povidone-iodine (common antiseptic with a broad spectrum of antimicrobial activity) at similar concentrations of iodine, for which the growth-inhibition zones had diameter against S. *aureus* was 10 mm and against *E. Coli,* 7 mm. Additionally, the composite films prepared at different iodine-containing microbead-loadings (8%, 25% or 46%) and tested on *E. coli* cultures also produced inhibition zones, the diameters of positively correlated to iodine concentration. These results demonstrated the capacity of iodine to be persistently released from UiO-66 or AuNR@SiO₂@UiO-66 microbeads, either in the solid-state or when incorporated in films, throughout the agar layer during overnight incubation at 37 °C. However, NIR irradiation did not enhance the antibacterial activity of the iodine-loaded AuNR@SiO₂@UiO-66(I₂)composites. This behavior was partially expected as, in these experiments, the antibacterial activity of iodine release was only evaluated through diffusion along the agar inoculated with bacterial suspensions: the activity of the iodine released through the air passively or actively was not assessed (*i.e. via* light-triggering).

To solve the aforementioned problem, and to evaluate the antibacterial performance of the composite films upon iodine release through the air by sublimation *via* both the passive and the light-triggered mechanisms, we designed a new experimental set-up and performed multiple experiments with it. It comprised placing a 1 cm² portion of each composite film, containing iodine-loaded AuNR@SiO₂@UiO-66(I₂) microbeads at either 8% or 25%, over a plate cover, and then putting the agar plate inoculated with bacterial suspensions face down on the cover, such that the distance between the film and the agar plate was ca. 1 cm. Next, three different experiments were performed. In the first experiment, the two plates were co-incubated at 37 °C for 18 h to evaluate the antibacterial performance conferred by passive iodine release. In the second, the composite film was irradiated with NIR light (intensity: 224 mW cm⁻²) for 5 min. Then, the composite film was immediately removed, and the agar plate was sealed with parafilm and finally, incubated at 37 °C for 18 h. The third experiment was similar to the second one, except that the film was not irradiated. These last two experiments were designed to enable evaluation of the antibacterial performance conferred by the light-triggered release of iodine. In all cases, the corresponding control conditions using composite films without iodine and/or without irradiation also were tested.

In the above three experiments, we observed that passive release of iodine *via* sublimation inhibited the growth of both *E. coli* (Figures 6a,d) and *S*. *aureus* (Figures 7a,d). Moreover, we also observed that the light-triggered release of iodine inhibited the growth of both bacteria (Figures 6b,c and e,f and Figures 7b,c and e,f). In all cases, the inhibition zones had a larger diameter in the irradiated experiments than in the nonirradiated ones. Importantly, the antibacterial activity of the irradiated composite films positively correlated with the content of iodine-loaded AuNR@SiO₂@UiO-66(I₂) microbeads. The film containing microbeads at 8% (w/w) exhibited greater antibacterial activity against S. *aureus* than against *E. coli*; however, this difference was less pronounced for the film containing microbeads at 25% (w/w). Altogether, these results confirmed the effective passive, long-lasting antibacterial activity of our composite films against gram-positive and gram-negative bacteria and that this activity can be enhanced by irradiating the films with NIR light to trigger release of iodine.

### 3. Conclusions

A MOF composite was designed, synthesized, and validated for antibacterial activity *in vitro.* The composite was shown to store iodine and then, release it two ways: either passively and slowly, or, upon triggering by near-infrared light, actively and quickly. The composite comprises SiO₂-coated AuNRs entrapped within microbeads of the MOF UiO-66, which is then loaded with iodine and can be produced as thin films. The AuNR@SiO₂@UiO-66 composite was synthesized by a scalable, continuous-flow, spray-drying methodology, enabling facile and homogeneous distribution of the entrapped photoactive AuNR@SiO₂ nanoparticles throughout the microbeads. We found that the silica coating around the AuNRs was essential to synthesize a long-life composite, as bare AuNRs were degraded upon exposure to iodine. The microporous UiO-66 can adsorb and store iodine at concentrations of up to 0.9 mg_{I2} mg_{composite}⁻¹, and then release it either passively over time, or actively, upon irradiation with NIR light, which heats the composite to temperatures of up to 274 °C. Intriguingly, rapid heating and cooling of the AuNR@SiO₂@UiO-66 composite enabled stepwise release of iodine through selective on/off switching. It was also shown that these AuNR@SiO₂@UiO-66 microbeads could be incorporated at different concentrations into organic polymers to afford iodine-based antibacterial films that retain the iodine adsorption capacity, and dual release mechanisms, of the parent composite. Finally, the passive and light-triggered antibacterial performance of these composite films was confirmed against *S*. *aureus* (gram-positive) and *E. coli* (gram-negative).

### Citation List

A.-N. Au-Duong, C.-K. Lee, Materials Science and Engineering C 76 (2017) 477-482.
T. K. Sau, C. J. Murphy, J. Am. Chem. Soc. 2004, 126, 8648-8649
W. Stȯber, A. Fink, E. Bohn, J. Colloid Interface Sci. 1968, 26, 62-69
J. G. Hinman, A. J. Stork, J. A. Varnell, A. A. Gewirth, C. J. Murphy, Faraday Discuss. 2016, 191, 9
W. C. Wu, J. B. Tracy, Chem. Mater. 2015, 27, 2888
G. Boix, J. Troyano, L. Garzón-Tovar, C. Camur, N. Bermejo, A. Yazdi, J. Piella, N. G. Bastus, V. F. Puntes, I. Imaz, D. Maspoch, ACS Appl. Mater. Interfaces 2020, 12, 10554
M. Liu, L. Wang, X. Zheng, Z. Xie, ACS Appl. Mater. Interfaces 2017, 9, 41512

## Claims

1. A composite comprising photothermal nanoparticles entrapped in a metal-organic framework and iodine.

2. The composite according to claim 1, wherein the iodine is adsorbed in the pores of the composite.

3. The composite according to any one of claims 1-2, wherein the metal organic framework belongs to the UiO family, in particular, UiO-66.

4. The composite according to any one of claims 1-3, wherein the photothermal nanoparticles are gold nanorods coated by a shell comprising silica.

5. A composite comprising Au nanorods entrapped in a metal-organic framework, wherein the Au nanorods are coated by a shell comprising silica.

6. A method for preparing a composite as defined in any one of claims 1-4 which comprises:
(i) spray drying photothermal nanoparticles with metal ions and an organic ligand which is at least bidentate in the presence of a solvent;
(ii) collecting the dry composite; and
(iii) contacting the composite with iodine, in particular, gaseous diiodine.

7. The method according to claim 6, wherein the conditions to carry out the spray drying comprise a temperature selected from 140 to 200 °C.

8. The method according to any one of claims 6-7, wherein the photothermal nanoparticles, the metal ions and the organic ligand which is at least bidentate are contacted before spray-drying in the presence of a solvent and preheated at a temperature selected from 80 °C to 140 °C.

9. The method according to any one of claims 6-8, wherein the photothermal nanoparticles are gold nanorods coated by a shell comprising silica.

10. The method according to any one of claims 6-9, wherein the metal ion is Zr and the organic ligand is a dicarboxylic acid.

11. The method according to any one of claims 6-10, wherein the solvent is selected from water, ethanol, N,N-dimethylformamide (DMF), and mixtures thereof, in particular the solvent comprises DMF.

12. A polymer blend comprising a composite as defined in any one of claims 1-4 and a polymer.

13. A coating material comprising a composite as defined in any one of claims 1-4 or a polymer blend as defined in claim 12.

14. A medical device, medical equipment, hospital surface or filter comprising a composite as defined in any one of claims 1-4, a polymer blend as defined in claim 12 or a coating material as defined in claim 13.

15. Use of a composite as defined in any one of claims 1-4 as antimicrobial agent in polymer blends for the coating of surfaces.
